(19) Europäisches Patentamt
European Patent Office
Office européen des brevets

(11) EP 3 169 742 B1

(12) **EUROPEAN PATENT SPECIFICATION**

(45) Date of publication and mention of the grant of the patent:
**29.04.2020 Bulletin 2020/18**

(21) Application number: **15744496.9**

(22) Date of filing: **10.07.2015**

(51) Int Cl.:
***C09J 105/00*** *(2006.01)* ***C09J 133/06*** *(2006.01)*
***C09J 7/38*** *(2018.01)*

(86) International application number:
**PCT/EP2015/065816**

(87) International publication number:
**WO 2016/008814 (21.01.2016 Gazette 2016/03)**

(54) **PRESSURE SENSITIVE ADHESIVES**

DRUCKEMPFINDLICHE KLEBSTOFFE

ADHÉSIFS SENSIBLES À LA PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.07.2014 PCT/CN2014/082232**

(43) Date of publication of application:
**24.05.2017 Bulletin 2017/21**

(73) Proprietor: **BASF SE**
**67056 Ludwigshafen am Rhein (DE)**

(72) Inventors:
- **GERST, Matthias**
**67487 Maikammer (DE)**
- **GROSS, Michael**
**68165 Mannheim (DE)**
- **WILMS, Valerie**
**68165 Mannheim (DE)**
- **HOUILLOT, Lisa**
**68165 Mannheim (DE)**

(74) Representative: **BASF IP Association**
**BASF SE**
**G-FLP-C6**
**67056 Ludwigshafen (DE)**

(56) References cited:
**EP-A2- 0 351 193**
**EP-A2- 0 699 692**
**US-A- 6 121 508**
**US-B1- 6 245 838**

EP 3 169 742 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

The present invention relates to a formulation comprising: i) an aqueous polymer dispersion comprising: a) at least one homo- or copolymer P containing in the form of polymerized units at least one ethylenically unsaturated monomer; b) at least 6% by weight, based on the total of the ethylenically unsaturated monomer, of at least one saccharide-compound S; wherein in a) the at least one homo- or copolymer P is obtained by polymerization of the at least one ethylenically unsaturated monomer in the presence of at least a part of the at least one saccharide-compound S from b); ii) at least one tackifier.

The present invention relates further a process for preparing the inventive formulation, the use of this formulation as adhesive or for the production of self-adhesive sheets, self-adhesive tapes, self-adhesive labels or wash-off labels, and a self-adhesive sheet, a self-adhesive tape, a self-adhesive label or a wash-off label comprising the inventive formulation.

US 6,558,792 B1 discloses a pressure sensitive adhesive composition suitable for medical purposes comprising a rubbery elastomeric base and water soluble or water swellable hydrocolloids, where the adhesive composition includes a substantially homogeneous mixture of 15-60% of one or more rubbery components, 10-60% of a mixture of hydrocolloids that includes a cellulose derivative, amidated pectin, and potato starch, 0-50% of one or more tackifier resins, 0-15% cohesive strengthening agent, 0-10% of a plasticizer and 0-5% pigment. Therefore polyisobutylene was added to a mixer and softened, followed by the addition of sodium carboxymethylcellulose.

EP 0 814 140 A2 discloses a pressure sensitive adhesive (PSA) composition including a latex system of an aqueous polymer dispersion derived from ethylenically-unsaturated monomers in the presence of a water soluble protective colloid. The PSA compositions are used in the manufacture of a variety of articles that are intended to be easily attachable to another substrate by the application of pressure alone. The protective colloid is selected from the group consisting of carboxymethyl cellulose and derivates thereof.

JPH11158440 A describes a layer of an adhesive composition comprising, a non-releasable adhesive base, a pressure-sensitive adhesive type, a microparticulate filler (e.g. silica or starch) having a mean particle diameter of 0.01 - 40 μm and having no affinity for the base, and an antioxidant, whereby a phenolic antioxidant is formed on at least part of the surface of a base sheet.

EP 0 609 713 A1 discloses a pressure-sensitive adhesive tape comprising a substrate film and a pressure-sensitive adhesive layer containing a polymeric elastomer formed on at least one surface of the substrate film, wherein the substrate film and/or the polymeric elastomer of the pressure-sensitive adhesive layer contains at least 20% by weight based on the weight of the polymeric elastomer of a biodegradable high molecular weight material.

GB846365 A discloses a pressure-sensitive adhesive; based on elastomers such as natural rubber, e.g. crepe, or a synthetic rubber, e.g. a butadiene polymer or copolymer rubber or a polyisobutylene rubber, contain 1 - 10% of silica of particle size 0.01 - 0.03 micron.

GB1121878 A discloses a pressure-sensitive adhesive composition capable of substantial cohesion without curing comprises, as its basic ingredient, an uncured stereospecific elastomeric polymer of isoprene. The composition may also contain a tackifier, a compatible anti-oxidant, a metal oxide filler, starch as an adhesive modifier and at least one plasticizer. Specified tackifiers are dehydrogenated rosin, a hydrogenated rosin, mixtures of the two or esters of the same such as the glycerol ester of hydrogenated rosin, and the polyterpenes, while zinc oxide, aluminium oxide and their mixtures are specified fillers, lanolin, hydrogenated polybutene, and white mineral oil are specified plasticizers and ditolylamines in combination with a petroleum wax is the specified antioxidant.

US 4,508,864 A discloses improved aqueous based pressure sensitive adhesive compositions comprising a latex of a carboxylated butadiene-styrene polymer and a tackifier resin.

US 2002/0006990 A1 discloses a pressure sensitive adhesive/cohesive comprising the following components: 100 parts by weight natural rubber. About 5 - 35%, by weight of the rubber, acrylate monomer. About 0.5 - 8%, by weight of the rubber, acrylic acid and/or about 1 - 10% by weight of rubber 4-acetoxystyrene. About 0 - 20%, by weight of the rubber, ethyl hexyl acrylate. 1 - 50%, by weight of the rubber, a finely divided hard particulate material having substantially no thermoplasticity. 0 - 50%, by weight of the rubber, starch. And 0 - 40%, by weight of the rubber, carboxylated styrene-butadiene latex, or carboxylated polychloroprene latex, or vinylpyridine styrene-butadiene latex or pre-crosslinked natural rubber latex, or a tackifier, or combinations thereof.

The electrosterically stabilized latex of natural rubber graft and block terpolymer with about 1.5% by weight of acrylic acid and about 28.5% by weight of methyl methacrylate and 0% by weight of ethyl hexyl acrylate, was admixed with fumed/or precipitated silicon dioxide and a starch.

WO 2013/083504 A1 discloses a paper or cardboard packaging produced from mineral oil contaminated, wherein the packaging includes a barrier layer obtainable by applying an aqueous polymer dispersion comprising a copolymer obtainable by emulsion polymerization of $C_1$-$C_4$ alkyl (meth)acrylates, acid monomers, e.g., acrylic acid or methacrylic acid, 0 to 20 wt% of acrylonitrile and 0 to 10 wt% of further monomers in an aqueous medium in the presence of a carbohydrate compound, preferably in the form of a degraded starch, wherein the glass transition temperature of

the copolymer is in the range from +10 to +45 °C. The barrier layer may be situated on one of the surfaces of the packaging or form one of multiple layers of a multilayered packaging coating or be situated as a coating on one side of an inner bag situated within the packaging.

The quality of a formulation as an adhesive, or film of adhesive, is critically dependent on the properties of the aqueous polymer dispersion and of the polymer present therein. On the one hand, the adhesion of the film of adhesive is to be at a high level, in order to achieve good adhesion to the substrate to which bonding is to take place. This is frequently problematic particularly in the case of nonpolar substrates such as plastics and plastics sheets. At the same time, the internal strength (cohesion) of the film of adhesive is to be sufficiently great that cutting does not entail any stringing or edge exudation, which would lead to contamination of the cutting tools and to sticking of the cut surfaces. To reach the desired properties expensive raw materials have to be used.

It is therefore an object of the present invention to provide a formulation, especially for the use as an pressure-sensitive adhesive, which is based on low raw material costs. Preferably, the formulation has a high value for cohesion without a remarkable decreasing value for adhesion.

The object was solved by a formulation comprising:

i) an aqueous polymer dispersion comprising:

a) at least one homo- or copolymer P containing in the form of polymerized units at least one ethylenically unsaturated monomer, wherein
as the at least one ethylenically unsaturated monomer a monomer mixture is employed, consisting of:

a1) 65% to 99.8% by weight of at least one monomer A, wherein said monomer A is at least one $C_2$-$C_{12}$ alkyl acrylate;

a2) 0.1 % to 30% by weight of at least one monomer B selected from the group consisting of a methyl acrylate, a $C_1$-$C_{12}$ alkyl methacrylate, a $C_1$-$C_{12}$ alkyl methacrylate derivate, a vinylaromatic monomer, a vinyl ester of aliphatic $C_2$-$C_{10}$ carboxylic acids, or mixtures thereof;

a3) 0% to 10% by weight of at least one monomer C, wherein said monomer C is a monoethylenically unsaturated monomer having at least one hydroxyalkyl group;

a4) 0.1 % to 5% by weight of at least one monomer D, wherein said monomer D is a monoethylenically unsaturated monomer having at least one acid group,

wherein the total of monomers A to D equals 100% by weight,
and

b) at least 6% by weight, based on the total of monomers A to D, of the at least one saccharide-compound S;

wherein in a) the at least one homo- or copolymer P is obtained by polymerization of the at least one ethylenically unsaturated monomer in the presence of at least a part of the at least one saccharide-compound S from b);

ii) at least one tackifier.

The object was further solved by a process for preparing the inventive formulation, the use of the formulation as an adhesive, the use of the inventive formulation for the production of self-adhesive sheets, self-adhesive tapes or self-adhesive labels and the use of the inventive formulation for the production of a wash-off label.

The present invention is further elucidated by the following embodiments and preferred embodiments. They may be combined freely unless the context clearly indicates otherwise.

In the sense of the present invention a formulation is a heterogeneous mixture of compounds, which are not chemically bonded to each other, or not or hardly dissolve in each other.

Preferably, the inventive formulation is an aqueous formulation.

In the sense of the present invention a dispersion is a heterogeneous mixture of compounds, which are not chemically bonded to each other, or not or hardly dissolve in each other. As a result one compound (dispersed phase or secondary phase) is very finely distributed in another compound (dispersant, continuous phase or dispersion medium). In this case a "substance" is dispersed in another "substance".

Ethylenically unsaturated in the sense of the present invention means that a chemical compound exhibits at least one carbon carbon double bond.

A tackifier in the sense of the present invention is a chemical compound used in formulating adhesives to increase the tack, the stickiness of the surface of the adhesive. Tackifiers are usually low-molecular weight compounds with a high glass transition temperature. At low strain rate, they provide higher stress compliance, and become stiffer at higher strain rates.

"At least a part" of the at least one saccharide-compound S in the sense of the present invention means that based on the total amount in b) of the saccharide-compound S a part or the total amount is present at the beginning of the (emulsion) polymerization and in the case a part of saccharide-compound S is present at the beginning the rest is added on the course of the polymerization.

A homo- or copolymer P in the sense of the present invention can be a polymer consisting of only one kind of monomers in polymerized form (equal to the homopolymer P) or a polymer consisting of different kinds of monomers in polymerized form (equal to the copolymer P). The homo- or copolymer P of the present invention can also be entitled "polymer".

"In the presence" of at least a part of the at least one saccharide-compound S from b) in the sense of the present invention means that at least a part the at least one saccharide-compound S and the at least one ethylenically unsaturated monomer are in contact with each other, for example in the same reactor, whereby the at least one ethylenically unsaturated monomer is subsequently polymerized.

According to the invention a homo- or copolymer P is obtained by emulsion polymerization of the at least one ethylenically unsaturated monomer in a) in the presence of at least a part of the at least one saccharide-compound S from b). Preferably, the emulsion polymerization is a radically initiated aqueous emulsion polymerization. The implementation of a radically initiated aqueous emulsion polymerization of ethylenically unsaturated monomers has been widely described [see e.g. Encyclopedia of Polymer Science and Engineering, Vol 8, page 659 et seq (1987) DC Blackley, in high polymer latexes, Vol 1, page 35 et seq (1966), H. Warson, The Applications of Synthetic Resin Emulsion , page 246 et seq, chapter 5 (1972), D. Diederich, chemicals in our time 24, pages 135-142 (1990), Emulsion Polymerization, Interscience Publishers, New York (1965), DE-A 40 03 422 and dispersions of synthetic high polymers, F. Holscher, Springer-Verlag, Berlin, 1969]. It is usually such that the monomers, frequently with the concomitant use of a dispersant, are dispersed in an aqueous medium and polymerized by means of a radical polymerization initiator.

It is self-evident that the preparation of the polymer dispersion in the context of the present disclosure can be carried out with a seed, stage, shot and gradient mode of operation.

The emulsion polymerization can be initiated using water-soluble initiators. Water-soluble initiators are, for example, ammonium salts and alkali metal salts of peroxodisulfuric acid, such as sodium peroxodisulfate, hydrogen peroxide or organic peroxides, e. g. tert-butyl hydroperoxide. Also suitable as initiators are those known as reduction-oxidation (redox) initiator systems. The redox initiator systems consist of at least one, usually inorganic, reducing agent and one organic or inorganic oxidizing agent. The oxidizing component comprises, for example, the initiators already stated above for the emulsion polymerization. The reducing component is, for example, alkali metal salts of sulfurous acid, such as, for example, sodium sulfite, sodium hydrogensulfite, alkali metal salts of disulfurous acid such as sodium disulfite, bisulfite addition compounds with aliphatic aldehydes and ketones, such as acetone bisulfite, or reducing agents such as hydroxymethanesulfinic acid and its salts, or ascorbic acid. The redox initiator systems can be used along with soluble metal compounds whose metallic component is able to exist in a plurality of valence states. Customary redox initiator systems are, for example, ascorbic acid/iron(II) sulfate/sodium peroxodisulfate, tert-butyl hydroperoxide/sodium disulfite, tert-butyl hydroperoxide/Na-hydroxymethanesulfinic acid. The individual components - the reducing component, for example - may also be mixtures, an example being a mixture of the sodium salt of hydroxymethanesulfinic acid with sodium disulfite.

The stated initiators are used usually in the form of aqueous solutions, with the lower concentration being determined by the amount of water that is acceptable in the dispersion, and the upper concentration by the solubility of the respective compound in water. Generally speaking, the concentration of the initiators is 0.1 to 30 wt.%, preferably 0.2 to 20 wt.%, more preferably 0.3 to 10 wt.%, based on the total of the monomers to be polymerized. It is also possible for two or more different initiators to be used in the emulsion polymerization.

In the polymerization it is possible to use the chain transfer agents (CTAs). Suitable chain transfer agents include tert-butyl mercaptan, thioglycolic acid, thioglycolic acid ethyl ester, mercaptopropyltrimethoxysilane, tert-dodecyl mercaptan, 2-mercaptoethanol, thiopropylene glycol, 2-ethylhexyl thioglycolate and 2-mercaptopropanol, with 2-mercaptoethanol being currently preferred. Bifunctional chain transfer agents such as bis-(4-hydroxy phenyl) disulfide, which disassociate into two monofunctional chain transfer segments, can also be employed in the practice of this invention. Chain transfer agents which can be employed in this invention can contain one hydroxy group, thereby insuring that the resulting polymer of ethylenically unsaturated monomer will have a single terminal hydroxyl-containing moiety.

The emulsion polymerization takes place in general at 30 to 130°C, preferably at 50 to 100 °C. The temperature can be raised during the polymerization - for example, from a starting temperature in the range from 50 to 85°C to a final temperature in the range from greater than 85 to 100°C. The polymerization medium may consist either of water alone or of mixtures of water and water-miscible liquids such as methanol. It is preferred to use just water.

Optionally, a polymer seed may be included in the initial polymerization charge, for more effective establishment of the particle size.

The manner in which the initiator is added to the polymerization vessel in the course of the radical aqueous emulsion polymerization is known to a person of ordinary skill in the art. It may either be included in its entirety in the initial charge to the polymerization vessel, or else inserted continuously or in stages, at the rate at which it is consumed, in the course of the radical aqueous emulsion polymerization. In each specific case this will depend on the chemical nature of the initiator system and on the polymerization temperature. It is preferred to include part in the initial charge and to feed in the remainder to the polymerization zone at the rate of its consumption. For the purpose of removing the residual monomers, initiator is usually also added after the end of the emulsion polymerization proper, i.e., after a monomer conversion of at least 95%. For the feed process, the individual components may be added to the reactor from the top, in the side, or from below, through the reactor base.

The emulsion polymerization of the invention produces aqueous polymer dispersions generally having solids contents of greater than 45 % by weight, as for example at least 50 % by weight, at least 55 % by weight, or at least 60 % by weight. A bimodal or polymodal particle size may be set, in order to give an even better rheological behavior, more particularly a lower viscosity.

The homo- or copolymer P thus prepared can used preferably in the form of its aqueous dispersion. The size distribution of the dispersion particles may be monomodal, bimodal, or multimodal. In the case of monomodal particle size distribution, the average particle size of the polymer particles dispersed in the aqueous dispersion is preferably less than 400 nm, more particularly less than 200 nm. By average particle size here is meant the $d_{50}$ of the particle size distribution, i. e., 50 wt.% of the total masses of all the particles have a smaller particle diameter than the $d_{50}$ figure. The particle size distribution can be determined in a known way using the analytical ultracentrifuge (W. Mächtle, Makromolekulare Chemie 185 (1984), pages 1025 - 1039). In the case of bimodal or multimodal particle size distribution, the particle size may be up to 1000 nm. The pH of the polymer dispersion is preferably set at a level of greater than 5, more particularly at a level of between 5.5 and 8.

The systems in question, in accordance with the invention, are aqueous polymer dispersions. In this the polymer takes the form of a heterogeneous phase composed of finely divided particles, having the polymer particle sizes indicated above, in a homogeneous aqueous phase. The homogeneous aqueous phase may comprise in addition to water and also the auxiliaries that are customarily used during preparation, surface-active substances, acids, bases and decomposition products from the emulsion polymerization-small amounts of water-miscible organic solvents, deodorizing compounds or molecular weight modifiers. The fraction of the last-mentioned components will customarily not exceed 3% by weight, based on the total weight of the dispersion.

The aqueous polymer dispersion of the invention is prepared by emulsion polymerization. In the course of the emulsion polymerization, ethylenically unsaturated monomers are polymerized in water, usually using ionic and/or nonionic emulsifiers and/or protective colloids, and/or stabilizers, as interface-active compounds for stabilizing the monomer droplets and the polymer particles subsequently formed from the monomers.

The pH-value of the polymer dispersion in the inventive formulation can be adjusted to a value of pH >4.5, more particularly to a pH in the range from 5 to 8. The pH is customarily adjusted by addition of a base such as ammonia or an alkali metal hydroxide, preferably in the form of an aqueous solution. A preferred base is ammonia.

In general the aqueous polymer dispersion can also be stabilized with a biocide.

It has additionally proven advantageous if the aqueous polymer dispersion, after it has been prepared, is stabilized by addition of an anionic surface-active substance. Preferred for this purpose are the dialkyl esters of sulfosuccinic acid or their salts, more particularly the sodium salts, especially the dialkyl esters of sulfosuccinic acid having 6 to 12 C atoms per alkyl radical. The aqueous polymer dispersion is customarily admixed, following the emulsion polymerization, with 0.05% to 2% and more particularly with 0.1 % to 1 % by weight of an anionic surface-active substance of this kind.

The polymer dispersions of the invention, besides the polymer, preferably comprise exclusively emulsifiers. More particularly it has been found appropriate for the polymer dispersion to comprise a combination of at least one anionic and at least one nonionic emulsifier as surface-active substance.

The anionic emulsifiers typically include aliphatic carboxylic acids having generally at least 10 C atoms and also salts thereof, more particularly their ammonium salts and alkali metal salts, aliphatic, araliphatic, and aromatic sulfonic acids having generally at least 6 C atoms and also their salts, more particularly their ammonium salts and alkali metal salts, sulfuric monoesters of ethoxylated alkanols and alkylphenols, and also their salts, more particularly their ammonium salts and alkali metal salts, and also alkyl, aralkyl, and aryl phosphates, including phosphoric monoesters of alkanols and alkylphenols.

Examples of suitable anionic emulsifiers are as follows: alkali metal salts of dialkyl esters of sulfosuccinic acid, and also alkali metal salts and ammonium salts of alkyl sulfates (alkyl radical: $C_8$ to $C_{12}$), of sulfuric monoesters of ethoxylated alkanols (EO degree: 4 to 30, alkyl radical: $C_{12}$ to $C_{18}$), of sulfuric monoesters of ethoxylated alkylphenols (EO degree: 3 to 50, alkyl radical: $C_4$ to $C_9$), of alkylsulfonic acids (alkyl radical: $C_{12}$ to $C_{18}$), and of alkylarylsulfonic acids

(alkyl radical: $C_9$ to $C_{18}$). Examples of suitable emulsifiers are also the below-indicated compounds of the general formula (I)

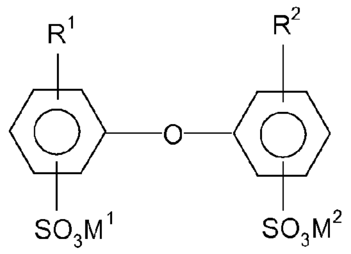

(I) ,

in which $R^1$ and $R^2$ are hydrogen or $C_4$ to $C_{18}$ alkyl and are not simultaneously hydrogen, and $M^1$ and $M^2$ can be alkali metal ions and/or ammonium ions. Preferably $R^1$ and $R^2$ are linear or branched alkyl radicals having 6 to 16 C atoms or hydrogen, and more particularly having 6, 12, and 16 C atoms, with $R^1$ and $R^2$ not both simultaneously being hydrogen. $M^1$ and $M^2$ are preferably sodium, potassium or ammonium ions, with sodium being particularly preferred. Particularly advantageous compounds are those in which $M^1$ and $M^2$ are sodium, $R^1$ is a branched alkyl radical having 12 C atoms, and $R^2$ is hydrogen or has one of the definitions other than hydrogen stated for $R^1$ . Use is frequently made of technical mixtures which have a fraction of 50% to 90% by weight of the monoalkylated product, an example being Dowfax(R) 2A1 (trademark of the Dow Chemical Company).

Suitable nonionic emulsifiers are customarily ethoxylated alkanols having 8 to 36 C atoms in the alkyl radical, ethoxylated mono-, di-, and tri-alkylphenols having customarily 4 to 12 C atoms in the alkyl radicals, the ethoxylated alkanols and alkylphenols customarily having a degree of ethoxylation in the range from 3 to 50.

Further suitable emulsifiers are found, for example, in Houben-Weyl, Methoden der organischen Chemie, Vol. 14/1, Makromolekulare Stoffe [Macromolecular compounds], Georg Thieme Verlag, Stuttgart, 1961, pp. 192 to 208.

Suitable emulsifiers are available commercially, as for example under the trade names Dowfax(R)2 A1, Emulan(R) NP 50, Dextrol(R) OC 50, Emulgator 825, Emulgator 825 S, Emu-lan(R) OG, Texapon(R) NSO, Nekanil(R) 904 S, Lumiten(R) I-RA, Lumiten(R) I-SC, Lumiten(R) E 3065, Disponil(R) FES 77, Lutensol(R) AT 18, Steinapol VSL, Emulphor NPS 25.

The polymer dispersion comprises in a) at least one homo- or copolymer P containing in the form of polymerized units at least one ethylenically unsaturated monomer. Preferably, the at least one homo- or copolymer P contains in the form of polymerized units at least 2 different ethylenically unsaturated monomers, more preferably at least 3 different ethylenically unsaturated monomers. In particular, the at least one homo- or copolymer P contains in the form of polymerized unit a plurality of different ethylenically unsaturated monomers. The different monomers lead to a copolymer P.

Preferably, the ethylenically unsaturated monomer is selected from the group consisting of a $C_2$-$C_{12}$ alkyl acrylate, a methyl acrylate, a $C_1$-$C_{12}$ alkyl methacrylate, a $C_1$-$C_{12}$ alkyl methacrylate derivate, a vinylaromatic monomer, a vinyl ester of aliphatic $C_2$-$C_{10}$ carboxylic acids, optionally a monoethylenically unsaturated monomer having at least one hydroxyalkyl group, a monoethylenically unsaturated monomer having at least one acid group, or mixtures thereof.

The polymer dispersion comprises in b) 10 to 70 % by weight and most preferably 10 to 50 % by weight, based on the total of the ethylenically monomer, of at least one saccharide-compound S.

Preferably, the inventive formulation comprises 5 to 50 % by weight, based on the total of the the ethylenically monomer, of at least one tackifier. More preferably, the formulation comprises 5 to 40 % by weight, and most preferably 5 to 35 %, by weight based on the total of the the ethylenically monomer, of at least one tackifier

Preferably, the inventive formulation comprises 5 to 80 % by weight of at least one further polymer dispersion v), which is different from the aqueous polymer dispersion i). The polymer dispersion v) comprises a1) at least one homo- or copolymer P1 containing in the form of polymerized units a monomer selected from the group consisting of $C_1$-$C_{12}$ alkyl acrylates, $C_1$-$C_{12}$ alkyl methacrylates, styrene, 1,4-butadiene, ethylene, vinyl acetate or mixtures thereof. Preferably, the at least one further polymer dispersion v) is an aqueous polymer dispersion.

The ethylenically unsaturated monomers for the polymerization are preferably selected such that the calculated glass transition temperature for the polymer is situated in the range from -60°C to 30°C, more particularly from -50°C to 10°C. Through skilled variation in the nature and amount of the monomers it is possible for the skilled person to prepare aqueous polymer compositions in which the polymers have a glass transition temperature within the desired range. A guideline is possible by means of the Fox equation. According to Fox (T.G. Fox, Bull. Am. Phys. Soc. 1956 [Ser. II] 1, page 123 and in accordance with Ullmann's Encyclopädie der technischen Chemie, volume 19, page 18, 4th edition, Verlag Chemie, Weinheim, 1980), the glass transition temperature of copolymers is calculated in good approximation by:

$$1/T_g = x^1/T_g^1 + x^2/T_g^2 + .... x^n/T_g^n,$$

where $X^1$, $X^2$, .... $X^n$ are the mass fractions of the monomers 1, 2, .... n, and $T_g^1$, $T_g^2$, .... $T_g^n$ are the glass transition temperatures of the polymers synthesized in each case only from one of the monomers 1, 2, .... n, in degrees Kelvin. The $T_g$ values for the homopolymers of the majority of monomers are known and are listed for example in Ullmann's Encyclopedia of Industrial Chemistry, volume A21, page 169, 5th edition, VCH Weinheim, 1992; other sources for glass transition temperatures of homopolymers include, for example, J. Brandrup, E.H. Immergut, Polymer Handbook, 1st edition, J. Wiley, New York 1966, 2nd edition, J. Wiley, New York 1975, and 3rd edition, J. Wiley, New York 1989.

The glass transition temperature can be determined by customary methods such as differential scanning calorimetry (see, for example, ASTM 4381/81, midpoint temperature).

In the inventive formulation in a) as the at least one ethylenically unsaturated monomer a monomer mixture is employed, consisting of:

a1) 65% to 99.8% by weight of at least one monomer A, wherein said monomer A is at least one $C_2$-$C_{12}$ alkyl acrylate;

a2) 0.1 % to 30% by weight of at least one monomer B selected from the group consisting of a methyl acrylate, a $C_1$-$C_{12}$ alkyl methacrylate, a $C_1$-$C_{12}$ alkyl methacrylate derivate, a vinylaromatic monomer, a vinyl ester of aliphatic $C_2$-$C_{10}$ carboxylic acids, or mixtures thereof;

a3) 0% to 10% by weight of at least one monomer C, wherein said monomer C is a monoethylenically unsaturated monomer having at least one hydroxyalkyl group;

a4) 0.1% to 5% by weight of at least one monomer D, wherein said monomer D is a monoethylenically unsaturated monomer having at least one acid group,

wherein the total of monomers A to D equals 100% by weight, and

b) 10 to 70 % by weight, based on the total of monomers A to D, of the at least one saccharide-compound S.

Suitable monomers A are those $C_2$-$C_{12}$ alkyl acrylates whose homopolymer has a glass transition temperature, Tg, of not more than -10°C, more particularly not more than -20°C, and more particularly not more than -30°C. Examples of suitable $C_2$-$C_{12}$ alkyl acrylates are ethyl acrylate, propyl acrylate, isopropyl acrylate, n-butyl acrylate, 2-butyl acrylate, isobutyl acrylate, n-pentyl acrylate, n-hexyl acrylate, 2-ethylhexyl acrylate, n-heptyl acrylate, isoheptyl acrylate, n-octyl acrylate, isooctyl acrylate, 2-propylheptyl acrylate, decyl acrylate, isodecyl acrylate, dodecyl acrylate, and isododecyl acrylate, and mixtures thereof.

Preferred $C_2$-$C_{12}$ alkyl acrylates are n-butyl acrylate, n-hexyl acrylate, 2-ethylhexyl acrylate, isooctyl acrylate, 2-propylheptyl acrylate, decyl acrylate, and isodecyl acrylate, and also mixtures of the aforementioned preferred alkyl acrylates, an example being a mixture of n-butyl acrylate with 2-ethylhexyl acrylate and/or with 2-propylheptyl acrylate.

Preferably, 50 to 99 % by weight of weight of at least one monomer A, based on the total of the monomers A to D, is provided. More preferably, 65 to 99.8% by weight of at least one monomer A, based on the total of the monomers A to D, is provided.

Suitable monomers B are styrene, $\alpha$-methylstyrene, vinyltoluene, 4-n-butylstyrene, 4-tert-butylstyrene, vinyl esters of aliphatic $C_2$-$C_{10}$ carboxylic acids such as vinyl acetate and vinyl propionate, $C_1$-$C_{12}$ alkyl methacrylates, $C_1$-$C_{12}$ alkyl methacrylates derivates such as glycidyl methacrylate (GMA), phenoxyalkyl esters of monoethylenically unsaturated $C_3$-$C_8$ monocarboxylic acids, more particularly 2-phenoxyethyl acrylate and methacrylate, monoethylenically unsaturated nitriles such as acrylonitrile and methacrylonitrile.

Particularly preferred monomers B are styrene, methyl acrylate, $C_1$-$C_4$ alkyl methacrylates, glycidyl methacrylate, or mixtures thereof, more particularly methyl methacrylate, styrene, and mixtures thereof.

Preferably, 0.1 to 35 % by weight of weight of at least one monomer B, based on the total of the monomers A to D, is provided. More preferably, 0.1 to 30 % by weight of at least one monomer B, based on the total of the monomers A to D, is provided.

Suitable monomers C are those monoethylenically unsaturated monomers having at least one hydroxyalkyl group such as amides of monoethylenically unsaturated $C_3$-$C_8$ monocarboxylic acids such as acrylamide and methacrylamide, and hydroxy-$C_2$-$C_4$ alkyl esters of monoethylenically unsaturated $C_3$-$C_8$ monocarboxylic acids, more particularly $C_2$-$C_4$ hydroxyalkyl acrylates and methacrylates such as 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 4-hydroxybutyl acrylate, and 4-hydroxybutyl methacrylate, and mixtures thereof.

Preferred monomers C are selected from $C_2$-$C_4$ hydroxyalkyl acrylates and methacrylates such as 2-hydroxyethyl acrylate, 2-hydroxyethyl methacrylate, 2-hydroxypropyl acrylate, 2-hydroxypropyl methacrylate, 3-hydroxypropyl acrylate, 3-hydroxypropyl methacrylate, 4-hydroxybutyl acrylate, 4-hydroxybutyl methacrylate, and mixtures thereof.

Preferably, 0 to 15% by weight of weight of at least at least one monomer C, based on the total of the monomers A to D, is provided. More preferably, 0 to 10% by weight of monomer C, and most preferably 0.1 to 10% by weight, based on the total of the monomers A to D, is provided.

Suitable monomers D are those monoethylenically unsaturated monomers having an acid group, more particularly a carboxyl group (COOH) or a hydroxysulfonyl group ($SO_3H$), and salts thereof, such as monoethylenically unsaturated $C_3$-$C_8$ monocarboxylic acids such as acrylic acid, methacrylic acid, crotonic acid, and isocrotonic acid, monoethylenically unsaturated $C_4$-$C_8$ dicarboxylic acids such as maleic acid, fumaric acid, and itaconic acid, and monoethylenically unsaturated sulfonic acids such as vinylsulfonic acid, methallylsulfonic acid, 2-acrylamido-2-methylpropanesulfonic acid.

Preferred monomers D are those having at least one carboxyl group, and more particularly acrylic acid, itaconic acid, methacrylic acid, and mixtures thereof.

Preferably, 0.1 to 10% by weight of weight monomer D, based on the total of the monomers A to D, is provided. More preferably, 0.1 to 5% by weight of monomer D, based on the total of the monomers A to D, is provided.

In the inventive formulation in a) as the at least one ethylenically unsaturated monomer a monomer mixture is employed, consisting of:

a1) 65% to 99.8% by weight of at least one monomer A, wherein said monomer A is at least one $C_2$-$C_{12}$ alkyl acrylate;

a2) 0.1 % to 30% by weight of at least one monomer B selected from the group consisting of a methyl acrylate, a $C_1$-$C_{12}$ alkyl methacrylate, a $C_1$-$C_{12}$ alkyl methacrylate derivate, a vinylaromatic monomer, a vinyl ester of aliphatic $C_2$-$C_{10}$ carboxylic acids, or mixtures thereof;

a3) 0% to 10% by weight of at least one monomer C, wherein said monomer C is a monoethylenically unsaturated monomer having at least one hydroxyalkyl group;

a4) 0.1 % to 5% by weight of at least one monomer D, wherein said monomer D is a monoethylenically unsaturated monomer having at least one acid group,

wherein the total of monomers A to D equals 100% by weight, and

b) 10 to 70 % by weight, based on the total of monomers A to D, of the at least one saccharide-compound S.

"Saccharide-compound" in the context of the present invention can be referred to monosaccharides, oligosaccharides, polysaccharides, sugar alcohols, and substitution products and derivatives of the aforementioned compounds.

Monosaccharides are organic compounds of the general formula $C_nH_{2n}O_n$, wherein n is an integer of 5, 6, 7, 8 or 9. These monosaccharides are also known as pentoses, hexoses, heptoses, octoses or nonoses, whereby these compounds are divided to the corresponding aldoses, which have an aldehyde group, or to ketoses, having a keto group. Therefore the monosaccharides comprise aldo- or ketopentoses,-hexoses, -heptoses, -octoses or -nonoses. Preferred are monosaccharide compounds occurring in nature, like pentoses and hexoses, whereby glucose, mannose, galactose and / or xylose are particularly preferred. Of course, all stereoisomers are also includes of the above mentioned monosaccarides.

Compounds which are composed of at least two, but a maximum of ten monosaccharide units via glycosidic bonds are referred to as oligosaccharides. Preferred oligosaccharides are disaccharides, of which lactose, maltose and / or sucrose are particularly preferred. Of course, the present invention also are all stereoisomers of all the above oligosaccharides also be included. Saccharide compounds, which are composed of more than ten monosaccharide units are referred to in this document as polysaccharide. The polysaccharide compounds of the structural elements of a monosaccharide (known as homoglycans) and the structural elements from two or more different monosaccharides (known as heteroglycans) may be constructed. Homoglycans according to the invention are preferably employed.

The sugar alcohols are the hydrogenation products of the above aldo- or ketopentoses,-hexoses, -heptoses, -octoses or -nonoses, of which is $C_nH_{2n+2}O_n$ the general formula wherein n is an integer of 5, 6, 7, 8 or 9. Preferred sugar alcohols include mannitol, lactitol, sorbitol and/or xylitol.

Of course also substitution products and derivatives of the above mono-, oligo- and polysaccharides as well as the sugar alcohols are included. Substitution products can be those, in which at least one hydroxyl group of the saccharide-compound S was functionalized while maintaining the structure of saccharide-compound S, for example by esterification, etherification, oxidation, etc.

An important advantage of the saccharide-compound S is that in its application, apart from the production in a very simple manner from the partial hydrolysis of the initial starch, no further chemical modification is required. Of course, the saccharide-compound S can be modified by etherification or esterification. This chemical modification may also have been carried out on the crude starch before the degradation.

Preferably, in the inventive formulation the saccharide-compound S is selected from the group consisting of starch, cellulose, guar gum, xanthan gum, alginate, pectin, chitosan, gum arabic, gellan gum or mixtures thereof.

Preferably, in the inventive formulation the saccharide-compound S is starch, a starch derivative, and/or a substitution product of these. Particular preference is given to maltodextrin and/or glucose syrup.

Preferably, the maltodextrin can be used as a maltodextrin solution or a spray-dried powder.

A parameter for characterizing the degree of degradation of starches is the DE value. Here DE stands for Dextrose Equivalent and describes the percentage of reducing sugar in the dry substance. The DE value therefore corresponds to the amount of glucose (= dextrose) in grams that would have the same reducing power per 100 g dry matter. The DE value is a measure of how far the polymer degradation has occurred. Therefore starches with low DE value have a high percentage of polysaccharides, and a low content of low molecular weight mono-and oligosaccharides, whereas starches having a high DE value mainly composed of low molecular weight mono-or disaccharides.

Preferably, maltodextrins have DE values in the range 3 to 25. More preferably maltodextrins have DE values in the range 3 to 25 and weight average molecular weights from 10,000 to 30,000 g/mol.

Preferably, the glucose syrup has DE values from 20 to 30. More preferably, glucose syrup has DE values from 20 to 30 and a weight average molecular weights in the range 3,000 - 9,000 g/mol.

The total amount of saccharide-compound S may be added to the (aqueous) polymerization medium prior to or during the emulsion polymerization of the monomers A to D.

The addition of saccharide-compound S and monomers can take place in a characteristic ramp regime.

Preferably, in the preparation process of the invention at least 40% by weight, preferably 60 to 100% by weight of the total amount of the saccharide-compound S is run in during the emulsion polymerization in a feed process, and the addition of monomer as well takes place in the feed process, with the feed rate rising over time; i. e., the final rate of monomer feed is higher than the initial rate. The feed rate preferably rises continuously or incrementally in a plurality of steps, as for example in at least three or at least five steps. The feed rate of saccharide-compound S as well preferably increases continuously or in a plurality of steps incrementally, as for example in at least three or at least five steps. At the beginning of the polymerization, therefore, there is only very little of saccharide-compound S in the initial charge, or preferably none at all. The addition of saccharide-compound S preferably begins only after the polymerization has been commenced and at least 1 wt.%, at least 2 wt.%, or at least 5 wt.% of the total monomer amount has already been added to the polymerization vessel. The addition of saccharide-compound S is preferably continuous or incremental and in parallel with the continuous or incremental addition of the rest of the monomers.

Preferably, the total amount of saccharide-compound S is added to the aqueous polymerization medium prior to the emulsion polymerization of the monomers A to D. The polymerization of at least one portion or the total amount monomers A to D thus takes place in the presence of the saccharide-compound S.

Preferably, in the inventive formulation the solid content in the polymer dispersion is ≥ 5 to ≤ 90% by weight. More preferably, the solid content in the polymer dispersion is ≥ 10 to ≤ 75% by weight. Most preferably, the solid content in the polymer dispersion is ≥ 20 to ≤ 70% by weight.

The solid content is the percentage of non-volatile components. The solid content of the dispersion is determined by a balance with infrared moisture determination. In this case, a defined amount of the polymer dispersion is introduced into the device, heated to 140 °C and then maintained at this temperature. Once the mean weight loss is below 1 mg within 140 s, the measuring process is completed. The ratio of weight after drying and original sample weight indicates the solid content of the polymer dispersion.

The total solid content of the formulation can be computationally determined from the amounts of added substances and their solid content or concentrations.

Preferably, in the inventive formulation the tackifier is selected from the group consisting of natural resins, hydrocarbon resins, polyacrylates or mixtures thereof.

Tackifiers are known, for example, from Adhesives Age, July 1987, pages 19-23 or Polym. Mater. Sci. Eng. 61 (1989), pages 588-592. Examples of tackifiers are natural resins, such as rosins and their derivatives by disproportionation or isomerization, polymerization, dimerization or hydrogenation. They can be in their salt form (with, for example, mono- or polyvalent counterions (cations)) or, preferably, in their esterified form. Alcohols used for esterification can be mono- or polyhydric. Examples are methanol, ethanediol, diethylene glycol, triethylene glycol, 1,2,3-propanethiol and pentaerythritol.

Also used, furthermore, are hydrocarbon resins, examples being indene-coumarone resins, polyterpene resins, hydrocarbon resins based on unsaturated CH compounds, such as butadiene, pentene, methylbutene, isoprene, piperylene, divinylmethane, pentadiene, cyclopentene, cyclopentadiene, cyclohexadiene, styrene, α-methylstyrene, vinyltoluene.

Further compounds increasingly being used as tackifiers are polyacrylates of low molecular weight. These polyacrylates preferably have a weight-average molecular weight MW of less than 30,000. The polyacrylates consist preferably to the extent of at least 60% by weight, in particular at least 80% by weight, of $C_1$-$C_8$ alkyl (meth)acrylates.
Preferred tackifiers are naturally occurring or chemically modified rosins. Rosins consist predominantly of abietic acid or its derivatives.
The tackifiers are preferably themselves in the form of an aqueous dispersion in this case.
In addition to tackifiers it is also possible, for example, for other additives, such as thickeners, antifoams, plasticizers, pigments, wetting agents or fillers, to be employed in inventive formulation.
Preferably, the inventive formulation comprising

i) 50 to 95% by weight of the polymer dispersion,
ii) 5 to 50% by weight of at least one tackifier,
iii) 0 to 3% by weight of at least one surfactant, and
iv) 0 to 10% by weight of an additive,

wherein the total of the compounds of i) to iv) equals 100%.
More preferably, the inventive formulation comprising

i) 50 to 94.8% by weight of the polymer dispersion,
ii) 5 to 50% by weight of at least one tackifier,
iii) 0.1 to 3% by weight of at least one surfactant, and
iv) 0.1 to 10% by weight of an additive,

wherein the total of the compounds of i) to iv) equals 100%.
Preferably, the inventive formulation comprising

i) 15 to 90% by weight of the polymer dispersion,
ii) 5 to 50% by weight of at least one tackifier,
iii) 0 to 3% by weight of at least one surfactant, and
iv) 0 to 10% by weight of at least one additive,
v) 5 to 80% by weight of at least one further polymer dispersion v), which is different from the aqueous polymer dispersion i),

wherein the total of the compounds of i) to v) equals 100%.
More preferably, the inventive formulation comprising

i) 15 to 79.8% by weight of the polymer dispersion,
ii) 5 to 50% by weight of at least one tackifier,
iii) 0.1 to 3% by weight of at least one surfactant, and
iv) 0.1 to 10% by weight of at least one additive,
v) 15 to 79.8% by weight of at least one further polymer dispersion v), which is different from the aqueous polymer dispersion i),

wherein the total of the compounds of i) to v) equals 100%.
"By weight" for the at least one tackifier, the at least one surfactant, the at least one additive, the polymer dispersion and the at least one further polymer dispersion in the inventive formulation refers to the solid content of each component.
Preferably, the polymer dispersion v) comprises a1) at least one homo- or copolymer P1 containing in the form of polymerized units a monomer selected from the group consisting of styrene, 1,4-butadiene, ethylene, vinyl acetate or mixtures thereof.
A further object of the present invention is a process for preparing the inventive formulation comprising a free-radical aqueous emulsion polymerization of monomers of the at least one ethylenically unsaturated monomer of which the at least one homo- or copolymer P is composed by a monomer feed process, whereby 0 to 50% of the ethylenically unsaturated monomers, based on the total amount of the monomers to be polymerized, are added under polymerization conditions to 0 to 100% of the at least one saccharide-compound S, based on the total amount of the monomers to be polymerized, and at least the rest of the at least one ethylenically unsaturated monomers and the at least one saccharide-compound S are added in the course of the polymerization.
Preferably, the process for preparing the inventive formulation comprising a free-radical aqueous emulsion

polymerization of monomers of the at least one ethylenically unsaturated monomer of which the at least one homo- or copolymer P is composed by a monomer feed process, whereby 0.1 to 50% of the ethylenically unsaturated monomers, based on the total amount of the monomers to be polymerized, are added under polymerization conditions to 0.1 to 100% of the at least one saccharide-compound S, based on the total amount of the monomers to be polymerized, and at least the rest of the at least one ethylenically unsaturated monomers and the at least one saccharide-compound S are added in the course of the polymerization.

A further object of the present invention is the use of the inventive formulation as adhesive, preferably as pressure sensitive adhesive.

A further object of the present invention is the use of the inventive formulation for the production of self-adhesive sheets, self-adhesive tapes, self-adhesive labels or wash-off labels.

Further objects of the present invention are a self-adhesive sheet, a self-adhesive tape, a self-adhesive label or a wash-off label comprising the inventive formulation. Preferred is a self-adhesive label or a wash-off label comprising the inventive formulation.

The PSAs (pressure sensitive adhesive) are suitable for the production of self-adhesive products such as labels, films or tapes. The PSA can be applied by conventional methods, e.g. by rolling, knife coating, brushing, etc. to a support, e.g. paper or polymer film.

The water, if present, can be removed preferably by drying at from 50 to 150°C. The carrier can be cut before or after the application of the adhesive to (self)-adhesive sheets, labels or tapes. For subsequent use, the PSA-coated side of the substrates, is covered with a release paper, for example with a siliconized paper.

The formulation of the invention and the use of the inventive formulation as adhesive are suitable in principle for producing pressure sensitive adhesive coatings on any desired substrates such as paper, plastics sheets, more particularly transparent plastics sheets, and metal or metallized plastics sheets or metallized paper. Examples of plastics sheets are films made of polyethylene, polypropylene, which may have been biaxially or monoaxially oriented, polyethylene terephthalate, polyvinyl chloride, polystyrene, polyamide, and polyvinyl acetate, and also laminate sheets, examples being polyethylene/polyethylene terephthalate, polyethylene/polyvinyl acetate, polyethylene/polyvinyl alcohol.

Especially suitable carriers with non-polar surfaces are based on polyolefins, in particular polyethylene or polypropylene.

The thickness of the PSA coating is dependent on the desired application and is situated customarily in the range from 1 to 500 μm, more particularly in the range from 2 to 250 μm or 5 to 200 μm, corresponding to a coating of 1 to 500 $g/m^2$ more particularly 2 to 250 $g/m^2$ and especially 5 to 200 $g/m^2$.

The preferred embodiments of practicing the invention have been described. It should be understood that the foregoing is illustrative only and that other means and techniques can be employed without departing from the true scope of the invention claimed herein.

## Materials and Methods

Determination of viscosity: the Brookfield viscosity was determined in a method based on DIN EN ISO 3219 by means of a rotational viscometer (for example Physica MCR 301 rheometer with sample changer and CC27 measuring system, from Anton Paar) at 23°C and a shear rate of 0 to 500 $sec^{-1}$). The figure reported is the value at 100 $sec^{-1}$.

Abbreviations:

<u>Components</u>

pphm parts per hundred monomers: parts by weight per hundred parts by weight of monomer

<u>Monomers</u>

| | |
|---|---|
| AA | Acrylic acid |
| BA | n-Butyl acrylate |
| EHA | 2-Ethylhexyl acrylate |
| MA | Methyl acrylate |
| MMA | Methyl methacrylate |
| VAc | Vinyl acetate |
| HPA | 2-Hydroxypropyl acrylate |
| GMA | Glycidyl methacrylate |

| | |
|---|---|
| tDMK | tert.-Dodecylmercaptan |
| NaOH | sodium hydroxide |
| demin. water | demineralized water |

Saccharide compounds

| | |
|---|---|
| S1 | C*Plus 10998, 50 wt. % solution, Cargill |
| S2 | C*Plus 10998, powder, Cargill |
| S3 | Malto Dextrin, Zhucheng Dongxiao Biotechnology Co., LTD |
| S4 | Malto Dextrin DE18-21, Qinhuangdao Lihua Starch Co., LTD |

Tackifier dispersions

| | |
|---|---|
| Snt 780G | Snowtack SE780G from Lawter, a Harima Chemicals, Inc. company |
| T01 | low molecular weight acrylic resin with 65 pphm EHA, 34.75 pphm MMA, 0.25 AA, Mn approx. 20'000 g/mol, prepared according to US2013202886 |

Application tests, failure modes

| | |
|---|---|
| A | adhesive failure |
| K | cohesive failure |
| transfer | adhesive transfer |
| PT | paper tear |

**Performance Tests:**

The PSA dispersions were applied to Laufenberg silicone paper NSA 1370, dried, and transferred to Herma label paper (75 g/m$^2$, unprimed), to give an application rate of 20 g/m$^2$ of the dried adhesive. After conditioning of the laminates under standard conditions (23°C., 50% relative humidity) for at least 16 hours, determinations were made of the peel strength (adhesion), the shear strength (cohesion), and the quick stick at 23°C.

The PSA-coated carrier was slit into test strips 25mm wide.

**a) Quick Stick**

In the determination of the quick stick (surface tack, also called loop tack), a determination is made of the force with which an adhesive applied to a carrier material by bonding without pressure on to a substrate opposes removal from the substrate at a defined removal speed. The carrier material is label paper of 75 g/m$^2$, the substrate is cardboard. A test strip in 25 mm width and 250 mm length is slit from the adhesive-coated carrier and stored under standard conditions (23°C., 50% relative humidity) for at least 16 hours. The two ends of the test strip are folded over in a length of approximately 1 cm with the adhesive side inward. A loop is formed from the adhesive strip with the adhesive side outward, and the two ends are brought together and clamped into the upper jaw of a tensile testing machine. The test substrate mount is clamped into the lower jaw, and the test substrate is inserted. The adhesive strip loop is moved downward by the tensile testing machine at a speed of 300 mm/minute, and so the adhesive side of the test strip bonds to the substrate without additional pressure. The tensile testing machine is halted and is immediately moved upward again when the bottom edge of the upper jaw is 40 mm above the substrate. The test result is reported in N/25 mm width. The maximum value on the display (Fmax) is read off as the measure of the surface tack. An average is formed from at least two individual results.

**b) Shear Strength (Cohesion)**

For the determination of the shear strength, the test strips were adhered to steel plate with a bonded area of 25x25 mm, rolled down once using a roller weighing 1 kg, and, after 10 min, loaded in suspension with a 1 kg weight.

The shear strength (cohesion) was determined under standard conditions (23°C.; 50% relative humidity). The measure of the shear strength is the time in hours until the weight falls off; the average was calculated from at least 3 measurements in each case.

**c) Peel Strength (Adhesion)**

For the determination of the peel strength (adhesion), a test strip 25 mm wide was adhered to a cardboard test specimen and rolled down once using a roller weighing 1 kg. It was then clamped by one end into the upper jaws of a tensile strain testing apparatus. The adhesive strip was removed from the test surface at an angle of 90° and at 300 mm/min - the adhesive strip was bent around and removed perpendicular to the test specimen, and the expenditure of force required to achieve this was recorded. The measure of the peel strength was the force in N/25 mm which was obtained as the average value from at least two measurements. The peel strength was measured 20 minute after the bonding.

**d) Wash-off test (Wash-off ability)**

A 60x80 mm test piece was cut out, the siliconized release liner removed and the label adhered by hand to a clean glass bottle. The bond was maintained for 24 hours under standard conditions (23°C.; 50% relative humidity). After storage, the bottle was filled with water at the testing temperature and immediately immersed into 3L beaker with a 2.0 % solution of sodium hydroxide, stirred at 80°C. The time until full detachment of the label is reported.
The test methods correspond essentially to the Finat test methods (FTM) 2, 8, 9 and 26.

**Examples**

Process A - Conventional emulsion polymerization (not inventive)

Example Benchmark (not inventive)

Monomer composition: 79.5 pphm EHA, 8 pphm MMA, 8 pphm VAc, 2 pphm HPA, 2 pphm Sty, 0.5 pphm AA
A glass reactor, equipped with blade stirrer, feed dosing system, thermocouple and a reflux condenser, was charged at room temperature with a mixture of 220.3 g demineralized water, 0.29 g ascorbic acid and 5.2 g of a polystyrene seed polymer dispersion (particle size approx. 30nm, 33 wt. % solids contents). Two feed mixtures were prepared: a) Feed 1 consisted of 243.5 g demin. water, 17.8 g Disponil FES 77 (32 wt. % solution), 2.53 g Dowfax 2A1 (45 wt. % solution), 4.6 g sodium hydroxide (25 wt. % solution), 2.9 g acrylic acid, 11.4 g 2-hydroxypropyl acrylate, 11.4 g styrene, 45.6 g methyl methacrylate, 45.6 g vinyl acetate, 453.2 g 2-ethylhexyl acrylate. b) Feed 2 consisted of 32.6 g sodium peroxodisulfate (7 wt. % solution).
The reactor was flushed with nitrogen and heated to 85°C upon which 20% of feed 2 was added within 2 min. After 15 min stirring, the remainder of feeds 1 and 2 were started simultaneously and were added to the reactor according to the following pattern while keeping the temperature constant at 85°C: a) remainder of feed 1 in 180 min, b) remainder of feed 2 in 210 min. After end of feed 2, 19.8 g of demin. water were added, followed by stirring for 10 min at 85°C. At constant temperature, 5.7 g of tert.-Butylhydroperoxide (10 wt. % solution) and 7.0 g of Sodium acetonbisulfite (13.1 wt. % solution) were added over the course of 60 min. 4.9 g of Lumiten I-SC (58 wt. % solution) were added within 15 min and stirred in for another 15 min. 16.2 g of demin. water were added and the obtained product cooled to room temperature. 0.8 g of Acticid MV (1.5 wt. % solution, Thor GmbH) and additional 21.9 g demin. water were stirred in.
The obtained polymer dispersion had a solid content of 49.2% and a viscosity of 135mPas.
75 parts dispersion were mixed with 25 parts tackifier Snowtack SE780G (calculated on dry basis) according to description of Process F.

Process B - Formulation with saccharide compound (not inventive)

Example Comparison 1 (not inventive)

An aliquot of the polymer dispersion Benchmark made according to Process A was adjusted to pH of 7 with NaOH (10wt. % solution). Saccharide compound S1 solution (Cargill C*Plus 10998, 50 wt. % solution) was added in a ratio of 20 parts Saccharide compound to 80 parts polymer dispersion (calculated on dry basis) to obtain a polymer/saccharide compound blend.
75 parts dispersion were mixed with 25 parts tackifier Snowtack SE780G (calculated on dry basis) according to description of Process F.

Process C - Saccharide compound in initial charge (inventive)

Example E2 (inventive)

Monomer composition: 79.5 pphm EHA, 8 pphm MMA, 8 pphm VAc, 2 pphm HPA, 2 pphm Sty, 0.5 pphm AA; 20 pphm saccharide compound S1

A glass reactor, equipped with blade stirrer, feed dosing system, thermocouple and a reflux condenser, was charged at room temperature with a mixture of 161.7 g demineralized water, 0.29 g ascorbic acid and 228.0 g of saccharide compound S1 solution (Cargill C*Plus 10998, 50 wt. % solution). Two feed mixtures were prepared: a) Feed 1 consisted of 245.4 g demin. water, 17.8 g Disponil FES 77 (32 wt. % solution), 2.53 g Dowfax 2A1 (45 wt. % solution), 4.6 g sodium hydroxide (25 wt. % solution), 2.9 g acrylic acid, 11.4 g 2-hydroxypropyl acrylate, 11.4 g styrene, 45.6 g methyl methacrylate, 45.6 g vinyl acetate, 453.2 g 2-ethylhexyl acrylate. b) Feed 2 consisted of 91.2 g sodium peroxodisulfate (2.5 wt. % solution).

The reactor was flushed with nitrogen and heated to 85°C upon which 5% of feed 1 was added within 2 min, then 20% of feed 2 was added within 2 min at the same temperature. The remainder of feeds 1 and 2 were started simultaneously and were added to the reactor according to the following pattern while keeping the temperature constant at 85°C: a) remainder of feed 1 in 180 min, b) remainder of feed 2 in 210 min. After end of feed 2, 19.8 g of demin. water were added, followed by stirring for 10 min at 85°C.

At constant temperature, 5.7 g of tert.-Butylhydroperoxide (10 wt. % solution) and 7.0 g of Sodium acetonbisulfite (13.1 wt. % solution) were added over the course of 60 min. 4.9 g of Lumiten I-SC (58 wt. % solution) were added within 15 min and stirred in for another 15 min. 16.2 g of demin. water were added and the obtained product cooled to room temperature. 0.8 g of Acticid MV (1.5 wt. % solution) and additional 21.9 g demin. water were stirred in. The obtained polymer dispersion had a pH-value of 5.5, a solid content of 49.8% and a viscosity of 450 mPas.

75 parts dispersion were mixed with 25 parts tackifier Snowtack SE780G (calculated on dry basis) according to description of Process F.

Process D - Saccharide compound in feed (inventive)

Example E40 (inventive)

Monomer composition: 79.5 pphm EHA, 8 pphm MMA, 8 pphm VAc, 2 pphm HPA, 2 pphm Sty, 0.5 pphm AA; 20 pphm saccharide compound S1

A glas reactor, equipped with blade stirrer, feed dosing system, thermocouple and a reflux condenser, was charged at room temperature with a mixture of 200.0 g demineralized water and 0.58 g ascorbic acid. Two feed mixtures were prepared: a) Feed 1 consisted of 329.5 g demin. water, 422.3 g of saccharide compound S1 solution (Cargill C*Plus 10998, 54 wt. % solution), 35.6 g Disponil FES 77 (32 wt. % solution), 5.1 g Dowfax 2A1 (45 wt. % solution), 9.1 g sodium hydroxide (25 wt. % solution), 5.7 g acrylic acid, 22.8 g 2-hydroxypropyl acrylate, 22.8 g styrene, 91.2 g methyl methacrylate, 91.2 g vinyl acetate, 906.3 g 2-ethylhexyl acrylate. b) Feed 2 consisted of 69.3 g sodium peroxodisulfate (7 wt. % solution).

The reactor was flushed with nitrogen and heated to 85°C upon which 17,9 g NaPS (7 wt. % solution) were added. After 10 min step by step feed 1 was added in different feeding speeds: 8.2 g in 6 min, then 73.6 g in 22 min, then 147.2 g in 22 min, then 220.8 g in 22 min, finally the rest of feed 1 1491.9 g in 138 min. The remainder of feed 2 was started simultaneously and was added to the reactor in 210 min while keeping the temperature constant at 85°C. After end of feed 1 and feed 2 an amount of 40 g of demin. water were added, followed by stirring for 10 min at 85°C. At constant temperature, 12.4 g of tert.-Butylhydroperoxide (10 wt. % solution) and 15.1 g of Sodium acetonbisulfite (13.1 wt. % solution) were added over the course of 60 min. 10.7 g of Lumiten I-SC (58 wt. % solution) were added within 15 min and stirred in for another 15 min.

40 g of demin. water were added and the obtained product cooled to room temperature. 1.7 g of Acticid MV (1.5 wt. % solution) and additional 21.9 g demin. water were stirred in. The obtained polymer dispersion had a solid content of 59.0% and a viscosity of 794mPas.

75 parts dispersion were mixed with 25 parts tackifier Snowtack SE780G (calculated on dry basis) according to description of Process F.

Process F - General procedure to blend the tackifier with a dispersion

75 parts dispersion were mixed with 25 parts tackifier Snowtack SE780G (calculated on dry basis). In addition, the pH value was adjusted to pH=7 with NaOH (8%), Lumiten I-SC the defoamer Tage 2263 were added as well. Example for a formulation:

204.4 g of the polymer dispersion of example E2 (49.8 wt. %) were put in a 500 ml beaker. While stirring (400 rpm) firstly 0.1 g Tage 2263 (10%) and 2.1 g Lumiten ISC (58%) were added at room temperature followed by the addition of 61.7 g tackifier Snowtack SE780G (55%). The pH was adjusted to about pH=8 by the addition of 2.2 g NaOH (8%). Finally 0.2 g Aciticide MV (1.5%) and 9.2 g water were added. The blend was stirred for about 10 min and was let to sit at least 16 hours before preparing testing laminates. The solid content was about 49%.

Table 1: Benchmark and comparative examples, composition and process

| **Product** | **Composition and Process** | | | | | | | |
|---|---|---|---|---|---|---|---|---|
| | | | | | | | | |
| | **Polymer dispersion** | | | | | **PSA formulation** | | |
| **Example** | **Saccharide compound** | | **Monomers** | **Solid content** | **Viscosity** | **Tackifier** | | **Process** |
| | pphm | type | in pphm | % | mPas | parts | type | |
| | | | | | | | | |
| Benchmark | none | | 79.5 EHA/8 MMA/ 8 VAc/2 HPA/2 S/ 0.5 AA | 49.21 | 135 | 25 | Snt 780 G | A |
| | | | | | | | | |
| Comparison 1 | 20 | S1 | 79.5 EHA/8 MMA/ 8 VAc/2 HPA/2 S/ 0.5 AA | 49.8 | | 25 | Snt 780 G | B |
| | | | | | | | | |
| Comparison 2 | 10 | S1 | 79.5 EHA/8 MMA/ 8 VAc/2 HPA/2 S/ 0.5 AA | 49.1 | 600 | none | | C |
| Comparison 3 | 20 | S1 | 79.5 EHA/8 MMA/ 8 VAc/2 HPA/2 S/ 0.5 AA | 49.8 | 450 | none | | C |
| Comparison 4 | 30 | S1 | 79.5 EHA/8 MMA/ 8 VAc/2 HPA/2 S/ 0.5 AA | 49.2 | 60 | none | | C |
| Comparison 5 | 40 | S1 | 79.5 EHA/8 MMA/ 8 VAc/2 HPA/2 S/ 0.5 AA | 49.5 | 40 | none | | C |

Table 2: Benchmark and comparative examples, application properties

| **Product** | **Application properties** | | | | |
|---|---|---|---|---|---|
| | | | | | |
| **Example** | **Loop Tack in N per 25mm** | | **Shear resistance in h** | **Peel resistance at 90° in N per 25mm** | |
| | HDPE | Steel | Steel | HDPE 20 min | Steel 20 min |
| | | | | | |
| Benchmark | 8.9A | 15.8A | 2.0K | 5.4A | 7.1A |
| | | | | | |
| Comparison 1 | 2.5A transfer | 2.7A transfer | 1.9K | 5.1A transfer | 2.7A transfer |
| | | | | | |

(continued)

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE 20 min | Steel 20 min |
| Comparison 2 | 6.7A | 10.2A | >200 | 5.3A | 7.0A |
| Comparison 3 | 6.2A | 8.7A | >200 | 5.2A | 6.5A |
| Comparison 4 | transfer from release liner no more possible | | | | |
| Comparison 5 | transfer from release liner no more possible | | | | |

Using large amounts of saccharide compound in PSA formulation yields unfavorable application properties as demonstrated in Table 2. Blending saccharide compound with a conventional polymer dispersion typically leads to poor performance with low loop tack and peel resistance as can be seen for Comparison 1. Using saccharide compound during the polymerization process increases shear resistance, but the PSA exhibit too little adhesion when large amounts are employed. In particular samples Comparison 4 and 5 with large amounts of saccharide compound have lost their adhesiveness and thus their suitability as a PSA formulation altogether.

Table 3: Inventive examples, composition and process

| Product | Composition and Process | | | | | | | |
|---|---|---|---|---|---|---|---|---|
| | | | | | | | | |
| | Polymer dispersion | | | | | PSA formulation | | |
| Example | Saccharide compound | | Monomers | Solid content | Viscosity | Tackifier | | Process |
| | pphm | type | in pphm | % | mPas | parts | type | |
| | | | | | | | | |
| E1 | 10 | S1 | 79.5 EHA/8 MMA/8 VAc/2 HPA/2 S/0.5 AA | 49.1 | | 25 | Snt 780 G | C |
| E2 | 20 | S1 | 79.5 EHA/8 MMA/8 VAc/2 HPA/2 S/0.5 AA | 49.8 | | 25 | Snt 780 G | C |
| E3 | 30 | S1 | 79.5 EHA/8 MMA/8 VAc/2 HPA/2 S/0.5 AA | 49.2 | | 25 | Snt 780 G | C |
| E4 | 40 | S1 | 79.5 EHA/8 MMA/8 VAc/2 HPA/2 S/0.5 AA | 49.5 | | 25 | Snt 780 G | C |

Table 4: Inventive examples, application properties

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE 20 min | Steel 20 min |
| | | | | | |
| E1 | 12.5A | 14.9A | 59.3K | 6.1A | 10.1A |

(continued)

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE 20 min | Steel 20 min |
| E2 | 11.3A | 13.2A | 42.5K | 6.3A | 9.9PT |
| E3 | 10.6A | 11.3A | 59.2K | 6.2A | 9.8A |
| E4 | 10.9A | 8.8A | 25.5K | 6.1A | 9.7A |

Surprisingly, very large amounts of saccharide compound can be incorporated advantageously in PSA formulations by using the inventive process. Well-balance adhesive profiles are obtained when the emulsion polymerization is carried out in the presence of inventive saccharide compounds and the resulting polymer dispersions are formulated with suitable tackifier dispersions.

Table 5

| Product | Composition and Process | | | | | | | |
|---|---|---|---|---|---|---|---|---|
| | | | | | | | | |
| | Polymer dispersion | | | | | PSA formulation | | |
| Example | Saccharide compound | | Monomers | Solid content | Viscosity | Tackifier | | Process |
| | pphm | type | in pphm | % | mPas | parts | type | |
| | | | | | | | | |
| E5 | 20 | S1 | 79.5 EHA/8 MMA/8 VAc/2 HPA/2 S/0.5 AA | 49.1 | 616 | 25 | Snt 780 G | C |
| E6 | 20 | S1 | 79.5 EHA/8 MMA/8 VAc/2 HPA/2 S/0.5 AA | 49.86 | 2115 | 25 | Snt 780 G | C |
| E7 | 20 | S1 | 79.5 EHA/8 MMA/8 VAc/2 HPA/2 S/0.5 AA | 48.95 | 760 | 25 | Snt 780 G | C |
| E8 | 20 | S1 | 79.5 EHA/8 MMA/8 VAc/2 HPA/2 S/0.5 AA | 49.17 | 602 | 25 | Snt 780 G | C |

Table 6

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE 20 min | Steel 20 min |
| | | | | | |
| E5 | 7.9A | 15.4A | 45.2K | 5.6A | 9.9PT |
| E6 | 8.8A | 16.2A | 35.9K | 5.9A | 9.9PT |

(continued)

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE 20 min | Steel 20 min |
| E7 | 7.8A | 17.6A | 27.2K | 5.7A | 11.5PT |
| E8 | 8.0A | 16.4A | 50.6K | 5.6A | 9.2A |

Example E5

The same monomer composition, saccharide compound amount and type and polymerization process was used as for Example E2. The total amount of sodium peroxodisulfate was 0.4 pphm.

Example E6

The same monomer composition, saccharide compound amount and type and polymerization process was used as for Example E2. The total amount of sodium peroxodisulfate was 0.8 pphm.

Example E7

The same monomer composition, saccharide compound amount and type and polymerization process was used as for Example E2. The total amount of sodium peroxodisulfate was 1.2 pphm.

Example E8

The same monomer composition, saccharide compound amount and type and polymerization process was used as for Example E2. The total amount of sodium peroxodisulfate was 0.4 pphm, of which 40% were added into the initial charge before starting the emulsion feed. These examples demonstrate the versatility of the invention in case larger amounts of initiator are desired for production reasons.

Table 7

| Product | Composition and Process | | | | | | | |
|---|---|---|---|---|---|---|---|---|
| | | | | | | | | |
| | Polymer dispersion | | | | | PSA formulation | | |
| Example | Saccharide compound | | Monomers | Solid content | Viscosity | Tackifier | | Process |
| | pphm | type | in pphm | % | mPas | parts | type | |
| | | | | | | | | |
| E9 | 20 | S1 | 79.5 EHA/8 MMA/8 VAc/2 HPA/2 S/0.5 AA | 49.69 | 1044 | 25 | Snt 780 G | C |
| E10 | 20 | S1 | 79.5 EHA/8 MMA/8 VAc/2 HPA/2 S/0.5 AA | 49.12 | 2170 | 25 | Snt 780 G | C |
| E11 | 20 | S1 | 79.5 EHA/8 MMA/8 VAc/2 HPA/2 S/0.5 AA | 49.53 | 1970 | 25 | Snt 780 G | C |
| | | | | | | | | |

(continued)

| Product | Composition and Process | | | | | | | |
|---|---|---|---|---|---|---|---|---|
| | | | | | | | | |
| | Polymer dispersion | | | | | PSA formulation | | |
| Example | Saccharide compound | | Monomers | Solid content | Viscosity | Tackifier | | Process |
| | pphm | type | in pphm | % | mPas | parts | type | |
| E12 | 20 | S1 | 79.5 EHA/8 MMA/8 VAc/2 HPA/2 S/0.5 AA | 49.09 | 402 | 25 | Snt 780 G | C |
| E13 | 20 | S1 | 79.5 EHA/8 MMA/8 VAc/2 HPA/2 S/0.5 AA | 49.38 | 2775 | 25 | Snt 780 G | C |

Table 8

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE20 min | Steel 20 min |
| | | | | | |
| E9 | 8.4A | 14.9A | 64.9K | 5.6A | 10.1 PT |
| E10 | 9.3A | 15.4A | 67.1K | 5.8A | 9.9PT |
| E11 | 7.7A | 15.2A | 83.8K | 5.6A | 10.7PT |
| | | | | | |
| E12 | 8.0A | 15.3A | 52.7K | 5.5A | 9.3A |
| E13 | 8.2A | 15.0A | 46.4K | 6.1A | 10.6PT |

Example E9

The same monomer composition of the emulsion feed, saccharide compound amount and type and polymerization process was used as for Example E2. Instead of initially charging 5% of the emulsion feed, 5% of pure styrene was charged.

Example E10

The same monomer composition of the emulsion feed, saccharide compound amount and type and polymerization process was used as for Example E2. Instead of initially charging 5% of the emulsion feed, 5% of pure nBA were charged.

Example E11

The same monomer composition of the emulsion feed, saccharide compound amount and type and polymerization process was used as for Example E2. Instead of initially charging 5% of the emulsion feed, 5% of pure Methyl acrylate was charged.

Example E12

The same monomer composition of the emulsion feed, saccharide compound amount and type and polymerization process was used as for Example E2. This time, 2% of the total emulsion feed was initially charged.

Example E13

The same monomer composition of the emulsion feed, saccharide compound amount and type and polymerization process was used as for Example E2. This time, 10% of the total emulsion feed was initially charged.

Table 9

| **Product** | **Composition and Process** | | | | | | | |
|---|---|---|---|---|---|---|---|---|
| | | | | | | | | |
| | **Polymer dispersion** | | | | | **PSA formulation** | | |
| **Example** | **Saccharide compound** | | **Monomers** | **Solid content** | **Viscosity** | **Tackifier** | | **Process** |
| | pphm | type | in pphm | % | mPas | parts | type | |
| | | | | | | | | |
| E14 | 20 | S2 | 79.5 EHA/8 MMA/8 VAc/2 HPA/2 S/0.5 AA | 48.67 | 518 | 25 | Snt 780 G | C |
| E15 | 20 | S3 | 79.5 EHA/8 MMA/8 VAc/2 HPA/2 S/0.5 AA | 49.23 | 163 | 25 | Snt 780 G | C |
| E16 | 20 | S4 | 79.5 EHA/8 MMA/8 VAc/2 HPA/2 S/0.5 AA | 48.73 | 204 | 25 | Snt 780 G | C |

Table 10

| **Product** | **Application properties** | | | | |
|---|---|---|---|---|---|
| | | | | | |
| **Example** | **Loop Tack in N per 25mm** | | **Shear resistance in h** | **Peel resistance at 90° in N per 25mm** | |
| | HDPE | Steel | Steel | HDPE 20 min | Steel 20 min |
| | | | | | |
| E14 | 8.0A | 14.2A | >200 | 5.6A | 9.8PT |
| E15 | 8.1A | 13.4A | 114.9K | 5.4A | 7.2A |
| E16 | 8.8A | 13.0A | 66.7K | 5.8A | 7.4A |

Example E14

The same polymerization process and monomer composition of the emulsion feed was used as for Example E2. However, a different saccharide compound was used. Thus 20 pphm saccharide compound S2 in powdered form were dissolved directly in the initial charge.

Example E15

The same polymerization process and monomer composition of the emulsion feed was used as for Example

E2. However, this time 20 pphm saccharide compound S3 was used.

Example E16

The same polymerization process and monomer composition of the emulsion feed was used as for Example E2. However, this time 20 pphm saccharide compound S4 was used.

With the inventive process, different saccharide compounds can be used to achieve favorable PSA properties. If desired, the saccharide compound can be directly dissolved in the initial charge.

**Hierzu muss ich noch eine bessere Darstellung/Beschreibung wählen**

Table 11

| Product | Composition and Process | | | | | | | Further info and wet-properties | | |
|---|---|---|---|---|---|---|---|---|---|---|
| | Polymer dispersion | | | | | PSA formulation | | | | |
| Example | Saccharide compound | | Monomers | Solid content | Viscosity | Tackifier | | Process | Variations | Remark |
| | pphm | type | in pphm | % | mPas | parts | type | | | |
| | | | | | | | | | | |
| E17 | 40 | S1 | 79.5 EHA/8 MMA/8 VAc/2 HPA/2 S/0.5 AA | 49.22 | 214 | 25 | Snt 780 G | C | Dispersion with 40% saccahride compound in charge. Then mixed with 1 part pure dispersion of Benchmark example | overall saccharide content in dispersion 14.3% |
| E18 | 60 | S1 | 79.5 EHA/8 MMA/8 VAc/2 HPA/2 S/0.5 AA | 49.43 | 178 | 25 | Snt 780 G | C | Dispersion with 60% saccharide compound in charge. Then mixed with 2 parts pure dispersion of Benchmark example | overall saccharide content in dispersion 12.5% |
| E19 | 80 | S1 | 79.5 EHA/8 MMA/8 VAc/2 HPA/2 S/0.5 AA | 49.53 | 183.5 | 25 | Snt 780 G | C | Dispersion with 80% saccharide compound in charge. Then mixed with 3 parts pure dispersion of Benchmark example | overall saccharide content in dispersion 11.1% |
| E20 | 100 | S1 | 79.5 EHA/8 MMA/8 VAc/2 HPA/2 S/0.5 AA | 47.9 | | 25 | Snt 780 G | C | Dispersion with 100% saccharide compound in charge. Tehn mixed with 4 parts pure Benchmark example | overall saccharide content in dispersion 19% |

Table 12

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE 20 min | Steel 20 min |
| | | | | | |
| E17 | 9.7A | 13.3A | 63.3K | 5.6A | 7.2A |
| E18 | 9.6A | 13.7A | 55.5K | 5.5A | 7.3A |
| E19 | 9.6A | 14.0A | 47.7K | 5.5A | 7.8A |
| E20 | 9.3A | 14.3A | >70 | 5.5A | 7.9A |

Examples E17-E20: mixtures of saccharide compound-containing and -free dispersions as base for PSA formulations.

Table 13

| Product | Composition and Process | | | | | | | |
|---|---|---|---|---|---|---|---|---|
| | | | | | | | | |
| | Polymer dispersion | | | | | PSA formulation | | |
| Example | Saccharide compound | | Monomers | Solid content | Viscosity | Tackifier | | Process |
| | pphm | type | in pphm | % | mPas | parts | type | |
| | | | | | | | | |
| E21 | 20 | S1 | 79.5 EHA/8 MMA/8 VAc/2 HPA/2 S/0.5 AA | | | 20 | Snt 780 G | C |
| E22 | 20 | S1 | 79.5 EHA/8 MMA/8 VAc/2 HPA/2 S/0.5 AA | | | 15 | Snt 780 G | C |
| E23 | 20 | S1 | 79.5 EHA/8 MMA/8 VAc/2 HPA/2 S/0.5 AA | | | 10 | Snt 780 G | C |
| | | | | | | | | |
| E24 | 20 | S1 | 79.5 EHA/8 MMA/8 VAc/2 HPA/2 S/0.5 AA | | | 25 | T01 | C |
| E25 | 20 | S1 | 79.5 EHA/8 MMA/8 VAc/2 HPA/2 S/0.5 AA | | | 20 | T01 | C |
| E26 | 20 | S1 | 79.5 EHA/8 MMA/8 VAc/2 HPA/2 S/0.5 AA | | | 15 | T01 | C |
| E27 | 20 | S1 | 79.5 EHA/8 MMA/8 VAc/2 HPA/2 S/0.5 AA | | | 10 | T01 | C |

Table 14

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE 20 min | Steel 20 min |
| | | | | | |
| E21 | 8.7A | 13.8A | 61.2K | 5.8A | 7.8A |
| E22 | 7.0A | 11.5A | >200 | 5.5A | 7.7A |
| E23 | 6.7A | 9.1A | >200 | 5.3A | 7.3A |
| | | | | | |
| E24 | 7.4A | 10.4A | 9.2K | 4.8A | 7.8A |
| E25 | 6.8A | 8.8A | 36.9K | 4.7A | 7.5A |
| E26 | 6.6A | 8.9A | >200 | 4.7A | 7.4A |
| E27 | 6.7A | 9.1A | >200 | 4.3A | 7.2A |

Suitable polymer dispersions according to the invention can be formulated with a variety of different tackifiers as demonstrated by examples in Tables 13 and 14.

Table 15

| Product | Composition and Process | | | | | | | |
|---|---|---|---|---|---|---|---|---|
| | | | | | | | | |
| | Polymer dispersion | | | | | PSA formulation | | |
| Example | Saccharide compound | | Monomers | Solid content | Viscosity | Tackifier | | Process |
| | pphm | type | in pphm | % | mPas | parts | type | |
| | | | | | | | | |
| E28 | 20 | S1 | 84.5 EHA/3 MMA/8 VAc/2 HPA/2 S/0.5 AA | 48.73 | 408 | 25 | Snt 780 G | C |
| E29 | 20 | S1 | 86.5 EHA/1 MMA/8 VAc/2 HPA/2 S/0.5 AA | 49.89 | 774 | 25 | Snt 780 G | C |
| | | | | | | | | |
| E30 | 20 | S1 | 79.75 EHA/8 MMA/8 VAc/2 HPA/2 S/0.25 AA | 49.4 | 1434 | 25 | Snt 780 G | C |
| | | | | | | | | |
| E31 | 20 | S1 | 79.5 EHA/8 MMA/8 VAc/2 HPA/2 S/0.5 AA | 49.18 | 692 | 25 | Snt 780 G | C |
| E32 | 20 | S1 | 79.5 EHA/8 MMA/8 VAc/2 HPA/2 S/0.5 AA | 49.23 | 366 | 25 | Snt 780 G | C |

(continued)

| Product | Composition and Process | | | | | | | |
|---|---|---|---|---|---|---|---|---|
| | | | | | | | | |
| | Polymer dispersion | | | | | PSA formulation | | |
| Example | Saccharide compound | | Monomers | Solid content | Viscosity | Tackifier | | Process |
| | pphm | type | in pphm | % | mPas | parts | type | |
| | | | | | | | | |
| | | | | | | | | |
| E33 | 20 | S1 | 79.5 EHA/8 MMA/8 VAc/2 HPA/2 S/0.5 AA/0.25GMA | 49.17 | 172 | 25 | Snt 780 G | C |
| E34 | 20 | S1 | 79.5 EHA/8 MMA/8 VAc/2 HPA/2 S/0.5 AA/0.5GMA | 48.9 | 108 | 25 | Snt 780 G | C |
| | | | | | | | | |
| E35 | 20 | S1 | 49.5 n-BA/30 EHA/8 MMA/8 VAc/2 HPA/2 S/0.5 AA | 49.24 | 1502 | 25 | Snt 780 G | C |
| E36 | 20 | S1 | 49.5 n-BA/30 EHA/8 MMA/8 VAc/2 HPA/2 S/0.5 AA | 49.58 | 446 | 25 | Snt 780 G | C |

Table 16

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE 20 min | Steel 20 min |
| | | | | | |
| E28 | 9.0A | 15.1A | 37.3K | 5.7A | 8.2A |
| E29 | 9.4A | 13.7A | 19.7K | 5.5A | 7.8A |
| | | | | | |
| E30 | 8.3A | 13.1A | 26.9K | 5.6A | 8.4A |
| | | | | | |
| E31 | 9.5A | 15.2A | 22.1K | 6.1A | 7.7A |
| E32 | 11.0A | 19.4A | 3.7K | 6.8A | 12.1PT |
| | | | | | |
| E33 | 8.4A | 13.6A | 44.7K | 5.5A | |
| E34 | 9.3A | 12.3A | 30.7K | 5.5A | |
| | | | | | |
| E35 | 8.7A | 9.5A | >200 | 5.5A | 7.6A |

(continued)

| Product | Application properties | | | | |
|---|---|---|---|---|---|
| | | | | | |
| Example | Loop Tack in N per 25mm | | Shear resistance in h | Peel resistance at 90° in N per 25mm | |
| | HDPE | Steel | Steel | HDPE 20 min | Steel 20 min |
| | | | | | |
| E36 | 9.2A | 12.0A | 108.0K | 5.8A | 7.5A |

Example E28

The same polymerization process and polysacchride S1 amount was used as in for Example E2. The monomer composition of the emulsion feed to adjusted to contain 84.5 EHA, 3 MMA, 8 VAc, 2HPA, 2 S and 0.5 AA.

Example E29

The same polymerization process and polysacchride S1 amount was used as in for Example E2. The monomer composition of the emulsion feed to adjusted to contain 86.5 EHA, 1 MMA, 8 VAc, 2HPA, 2 S and 0.5 AA.

Example E30

The same polymerization process and polysacchride S1 amount was used as in for Example E2. The monomer composition of the emulsion feed to adjusted to contain 79.75 EHA, 8 MMA, 8 VAc, 2 HPA, 2 S and 0.25 AA.

Example E31

The same monomer composition, saccharide compound amount and type and polymerization process was used as for Example E2. The emulsion feed additionally contained 0.05 pphm tDMK.

Example E32

The same monomer composition, saccharide compound amount and type and polymerization process was used as for Example E2. The emulsion feed additionally contained 0.1 pphm tDMK.

Example E33

The same monomer composition, saccharide compound amount and type and polymerization process was used as for Example E2. The emulsion feed additionally contained 0.25 pphm GMA.

Example E34

The same monomer composition, saccharide compound amount and type and polymerization process was used as for Example E2. The emulsion feed additionally contained 0.5 pphm GMA.

Example E35

The same polymerization process and polysacchride S1 amount was used as in for Example E2. The monomer composition of the emulsion feed to adjusted to contain 49.5 n-BA, 30 EHA, 8 MMA, 8 VAc, 2 HPA, 2 S and 0.5 AA. Also, this time, only 2% of the total emulsion feed were initially charged.

Example E36

The same polymerization process and polysacchride S1 amount was used as in for Example E2. The monomer composition of the emulsion feed to adjusted to contain 84.5 EHA, 3 MMA, 8 VAc, 2 HPA, 2 S and 0.5 AA.

Samples of Tables 15 and 16 exemplify the versatility of the inventive approach for providing well-balanced PSA formulations with large amount of renewable resources. The polymers can be adjusted to exhibit high cohesive strength or high peel resistance depending on the specific application need.

Table 17

| **Product** | **Composition and Process** | | | | | | | |
|---|---|---|---|---|---|---|---|---|
| | | | | | | | | |
| | **Polymer dispersion** | | | | | **PSA formulation** | | |
| **Example** | **Saccharide compound** | | **Monomers** | **Solid content** | **Viscosity** | **Tackifier** | | **Process** |
| | pphm | type | in pphm | % | mPas | parts | type | |
| | | | | | | | | |
| E37 | 20 | S1 | 79.5 EHA/8 MMA/8 VAc/2 HPA/2 S/0.5 AA | 59.21 | 721 | 25 | Snt 780 G | D |
| E38 | 20 | S3 | 79.5 EHA/8 MMA/8 VAc/2 HPA/2 S/0.5 AA | 58.51 | 690 | 25 | Snt 780 G | D |
| E39 | 20 | S4 | 79.5 EHA/8 MMA/8 VAc/2 HPA/2 S/0.5 AA | 58.56 | 820 | 25 | Snt 780 G | D |
| E40 | 20 | S2 | 79.5 EHA/8 MMA/8 VAc/2 HPA/2 S/0.5 AA | 59.04 | 794 | 25 | Snt 780 G | D |

Table 18

| **Product** | **Application properties** | | | | |
|---|---|---|---|---|---|
| | | | | | |
| **Example** | **Loop Tack in N per 25mm** | | **Shear resistance in h** | **Peel resistance at 90° in N per 25mm** | |
| | HDPE | Steel | Steel | HDPE 20 min | Steel 20 min |
| | | | | | |
| E37 | 8.1A | 8.1A | 33.3K | 5.5A | |
| E38 | 10.3A | 9.2A | 74.9K | 6.2A | |
| E39 | 9.4A | 8.9A | 55.6K | 6.2A | |
| E40 | 11.6A | 10.4A | 31.3K | 6.2A | 7.1A |

Example E37

The monomer composition and polymerization process was the same as for Example E40. This time, 20pphm saccharide compound S1 was instead of S2.

Example E38

The monomer composition and polymerization process was the same as for Example E40. This time, 20pphm saccharide compound S3 was instead of S2.

Example E39

The monomer composition and polymerization process was the same as for Example E40. This time, 20pphm saccharide compound S4 was instead of S2.

Examples E37 - E40 demonstrate one way to obtain high solids contents containing polymer dispersions according to the present invention. Other ways will be obvious to the experienced practitioner.

Wash-off ability was determined for selected samples according to general procedure of the Wash-off test d). A paper label coated with 20 $g/m^2$ of comparative adhesive Example Benchmark detached after 30 seconds from the glass surface. The adhesive remained attached to the paper label. A label coated with 20 $g/m^2$ of inventive adhesive Example E2 detached in two stages. First, the paper face stock detached from the bottle after 10 seconds, subsequently the adhesive layer cleanly detached from the glass surface as a single sheet after about 30 seconds. This stepwise detachment may enable a clean separation of paper material and adhesive to improve the paper recycling process.

## Claims

**1.** A formulation comprising:

i) an aqueous polymer dispersion comprising:

a) at least one homo- or copolymer P containing in the form of polymerized units at least one ethylenically unsaturated monomer, wherein
as the at least one ethylenically unsaturated monomer a monomer mixture is employed, consisting of:

a1) 65% to 99.8% by weight of at least one monomer A, wherein said monomer A is at least one $C_2$-$C_{12}$ alkyl acrylate;
a2) 0.1% to 30% by weight of at least one monomer B selected from the group consisting of a methyl acrylate, a $C_1$-$C_{12}$ alkyl methacrylate, a $C_1$-$C_{12}$ alkyl methacrylate derivate, a vinylaromatic monomer, a vinyl ester of aliphatic $C_2$-$C_{10}$ carboxylic acids, or mixtures thereof;
a3) 0% to 10% by weight of at least one monomer C, wherein said monomer C is a monoethylenically unsaturated monomer having at least one hydroxyalkyl group;
a4) 0.1 % to 5% by weight of at least one monomer D, wherein said monomer D is a monoethylenically unsaturated monomer having at least one acid group,

wherein the total of monomers A to D equals 100% by weight, and
b) at least 10 to 70% by weight, based on the total of monomers A to D, of the at least one saccharide-compound S;

wherein in a) the at least one homo- or copolymer P is obtained by polymerization of the at least one ethylenically unsaturated monomer in the presence of at least a part of the at least one saccharide-compound S from b);
ii) at least one tackifier.

**2.** The formulation according to claim 1, wherein the saccharide-compound S is selected from the group consisting of starch, cellulose, guar gum, xanthan gum, alginate, pectin, chitosan, gum arabic, gellan gum or mixtures thereof.

**3.** The formulation according to claim 1 or 2, wherein the saccharide-compound S is starch, a starch derivative, and/or a substitution product of these.

**4.** The formulation according to any of the claims 1 to 3, wherein the formulation is an aqueous formulation.

**5.** The formulation according to any of the claims 1 to 4, wherein the solid content in the polymer dispersion is ≥ 5 to ≤ 90% by weight.

**6.** The formulation according to any of claims 1 to 5, wherein the tackifier is selected from the group consisting of natural resins, hydrocarbon resins, polyacrylates or mixtures thereof.

**7.** The formulation according to any of claims 1 to 6 comprising

i) 50 to 95% by weight of the polymer dispersion,
ii) 5 to 50% by weight of at least one tackifier,
iii) 0 to 3% by weight of at least one surfactant, and
iv) 0 to 10% by weight of an additive,

wherein the total of the compounds of i) to iv) equals 100%.

**8.** The formulation according to any of the claims 1 to 7, comprising

i) 15 to 90% by weight of the polymer dispersion,
ii) 5 to 50% by weight of at least one tackifier,
iii) 0 to 3% by weight of at least one surfactant, and
iv) 0 to 10% by weight of at least one additive,
v) 5 to 80% by weight of at least one further polymer dispersion v), which is different from the aqueous polymer dispersion i),

wherein the total of the compounds of i) to v) equals 100%.

**9.** The formulation according to any of the claims 1 to 8, wherein the polymer dispersion v) comprises a1) at least one homo- or copolymer P1 containing in the form of polymerized units a monomer selected from the group consisting of $C_1$-$C_{12}$ alkyl acrylates, $C_1$-$C_{12}$ alkyl methacrylates, styrene, 1,4-butadiene, ethylene, vinyl acetate or mixtures thereof.

**10.** A process for preparing a formulation according to any of the claims 1 to 9, comprising a free-radical aqueous emulsion polymerization of monomers of the at least one ethylenically unsaturated monomer of which the at least one homo- or copolymer P is composed by a monomer feed process, whereby 0 to 50% of the ethylenically unsaturated monomers, based on the total amount of the monomers to be polymerized, are added under polymerization conditions to 0 to 100% of the at least one saccharide-compound S, based on the total amount of the monomers to be polymerized, and at least the rest of the at least one ethylenically unsaturated monomers and the at least one saccharide-compound S are added in the course of the polymerization

**11.** The use of the formulation according to any of claims 1 to 9 as adhesive, preferably as pressure sensitive adhesive.

**12.** The use of the formulation according to any of claims 1 to 9 for the production of self-adhesive sheets, self-adhesive tapes, self-adhesive labels or wash-off labels.

**13.** A self-adhesive sheet, a self-adhesive tape, a self-adhesive label, or a wash-off label comprising the formulation according to any of the claims 1 to 9.

## Patentansprüche

**1.** Formulierung, umfassend:

i) eine wässrige Polymerdispersion, umfassend:

a) mindestens ein Homo- oder Copolymer P, das mindestens ein ethylenisch ungesättigtes Monomer einpolymerisiert enthält, wobei als das mindestens eine ethylenisch ungesättigte Monomer eine Monomerenmischung verwendet wird, die aus

a1) 65 bis 99,8 Gew.-% mindestens eines Monomers A, wobei es sich bei dem Monomer A um mindestens ein $C_2$-$C_{12}$-Alkylacrylat handelt,
a2) 0,1 bis 30 Gew.-% mindestens eines Monomers B aus der Gruppe bestehend aus einem Methylacrylat, einem $C_1$-$C_{12}$-Alkylmethacrylat, einem $C_1$-$C_{12}$-Alkyl-methacrylatderivat, einem vinylaromatischen Monomer, einem Vinylester von aliphatischen $C_2$-$C_{10}$-Carbonsäuren oder Mischungen davon,
a3) 0 bis 10 Gew.-% mindestens eines Monomers C, wobei es sich bei dem Monomer C und ein monoethylenisch ungesättigtes Monomer mit mindestens einer Hydroxyalkylgruppe handelt,
a4) 0,1 bis 5 Gew.-% mindestens eines Monomers D, wobei es sich bei dem Monomer D um ein

monoethylenisch ungesättigtes Monomer mit mindestens einer Säuregruppe handelt,

besteht, wobei sich die Summe der Monomere A bis D auf 100 Gew.-% beläuft, und
b) mindestens 10 bis 70 Gew.-%, bezogen auf die Summe der Monomere A bis D, der mindestens einen Saccharidverbindung S,

wobei in a) das mindestens eine Homo- oder Copolymer P durch Polymerisation des mindestens einen ethylenisch ungesättigten Monomers in Gegenwart mindestens eines Teils der mindestens einen Saccharidverbindung S aus b) erhalten wird,
ii) mindestens einen Klebrigmacher.

**2.** Formulierung nach Anspruch 1, wobei die Saccharidverbindung S aus der Gruppe bestehend aus Stärke, Cellulose, Guargummi, Xanthangummi, Alginat, Pektin, Chitosan, Gummi arabicum, Gellangummi oder Mischungen davon ausgewählt ist.

**3.** Formulierung nach Anspruch 1 oder 2, wobei es sich bei der Saccharidverbindung S um Stärke, ein Stärkederivat und/oder ein Substitutionsprodukt davon handelt.

**4.** Formulierung nach einem der Ansprüche 1 bis 3, wobei es sich bei der Formulierung um eine wässrige Formulierung handelt.

**5.** Formulierung nach einem der Ansprüche 1 bis 4, wobei der Feststoffgehalt in der Polymerdispersion $\geq 5$ bis $\leq 90$ Gew.-% beträgt.

**6.** Formulierung nach einem der Ansprüche 1 bis 5, wobei der Klebrigmacher aus der Gruppe bestehend aus Naturharzen, Kohlenwasserstoffharzen, Polyacrylaten oder Mischungen davon ausgewählt ist.

**7.** Formulierung nach einem der Ansprüche 1 bis 6, umfassend

i) 50 bis 95 Gew.-% der Polymerdispersion,
ii) 5 bis 50 Gew.-% mindestens eines Klebrigmachers,
iii) 0 bis 3 Gew.-% mindestens eines Tensids und
iv) 0 bis 10 Gew.-% eines Additivs,

wobei sich die Summe der Verbindungen von i) bis iv) auf 100 % beläuft.

**8.** Formulierung nach einem der Ansprüche 1 bis 7, umfassend

i) 15 bis 90 Gew.-% der Polymerdispersion,
ii) 5 bis 50 Gew.-% mindestens eines Klebrigmachers,
iii) 0 bis 3 Gew.-% mindestens eines Tensids und
iv) 0 bis 10 Gew.-% eines Additivs,
v) 5 bis 80 Gew.-% mindestens einer weiteren Polymerdispersion v), die von der wässrigen Polymerdispersion i) verschieden ist,

wobei sich die Summe der Verbindungen von i) bis v) auf 100 % beläuft.

**9.** Formulierung nach einem der Ansprüche 1 bis 8, wobei die Polymerdispersion v) a1) mindestens ein Homo- oder Copolymer P1 umfasst, das ein Monomer aus der Gruppe bestehend aus $C_1$-$C_{12}$-Alkylacrylaten, $C_1$-$C_{12}$-Alkylmethacrylaten, Styrol, 1,4-Butadien, Ethylen, Vinylacetat oder Mischungen davon einpolymerisiert enthält.

**10.** Verfahren zur Herstellung einer Formulierung nach einem der Ansprüche 1 bis 9, umfassend eine radikalische wässrige Emulsionspolymerisation von Monomeren des mindestens einen ethylenisch ungesättigten Monomers, aus dem das mindestens eine Homo- oder Copolymer P aufgebaut ist, nach einem Monomerzulaufverfahren, wobei 0 bis 50 % der ethylenisch ungesättigten Monomere, bezogen auf die Gesamtmenge der zu polymerisierenden Monomere, unter Polymerisationsbedingungen zu 0 bis 100 % der mindestens einen Saccharidverbindung S, bezogen auf die Gesamtmenge der zu polymerisierenden Monomere, gegeben werden und mindestens der Rest des mindestens einen ethylenisch ungesättigten Monomers und der mindestens einen Saccharidverbindung S im Lauf

der Polymerisation zugegeben werden.

**11.** Verwendung der Formulierung nach einem der Ansprüche 1 bis 9 als Klebstoff, vorzugsweise als Haftklebstoff.

**12.** Verwendung der Formulierung nach einem der Ansprüche 1 bis 9 zur Herstellung von Selbstklebefolien, Selbstklebebändern, Selbstklebeetiketten oder abwaschbaren Etiketten.

**13.** Selbstklebefolie, Selbstklebeband, Selbstklebeetikett oder abwaschbares Etikett, umfassend die Formulierung nach einem der Ansprüche 1 bis 9.

**Revendications**

**1.** Formulation comprenant :

i) la dispersion aqueuse de polymère comprenant :

a) au moins un homopolymère ou copolymère P contenant sous forme de motifs polymérisés au moins un monomère éthyléniquement insaturé,
en tant que l'au moins un monomère éthyléniquement insaturé, un mélange de monomères étant utilisé, constitué de :

a1) 65 % à 99,8 % en poids d'au moins un monomère A, ledit monomère A étant au moins un acrylate de $C_{2-12}$-alkyle ;
a2) 0,1 % à 30 % en poids d'au moins un monomère B choisi dans le groupe constitué par un acrylate de méthyle, un (méth) acrylate de $C_{1-12}$-alkyle, un dérivé de (méth) acrylate de $C_{1-12}$-alkyle, un monomère vinylaromatique, un ester de vinyle d'acides $C_{2-10}$-carboxyliques aliphatiques, ou des mélanges correspondants ;
a3) 0 % à 10 % en poids d'au moins un monomère C, ledit monomère C étant un monomère monoéthyléniquement insaturé possédant au moins un groupe hydroxyalkyle ;
a4) 0,1 % à 5 % en poids d'au moins un monomère D, ledit monomère D étant un monomère monoéthyléniquement insaturé possédant au moins un groupe de type acide, le total des monomères A à D étant égal à 100 % en poids, et

b) au moins 10 à 70 % en poids, sur la base du total des monomères A à D, de l'au moins un composé de saccharide S ;

où dans a), l'au moins un homopolymère ou copolymère P est obtenu par polymérisation de l'au moins un monomère éthyléniquement insaturé en présence d'au moins une partie de l'au moins un composé de saccharide S de b) ;
ii) au moins un agent tackifiant.

**2.** Formulation selon la revendication 1, le composé de saccharide S étant choisi dans le groupe constitué par l'amidon, la cellulose, la gomme de guar, la gomme de xanthane, un alginate, la pectine, le chitosane, la gomme arabique, la gomme gellane et des mélanges correspondants.

**3.** Formulation selon la revendication 1 ou 2, le composé de saccharide S étant l'amidon, un dérivé d'amidon, et/ou un produit de substitution de ceux-ci.

**4.** Formulation selon l'une quelconque des revendications 1 à 3, la formulation étant une formulation aqueuse.

**5.** Formulation selon l'une quelconque des revendications 1 à 4, la teneur en solides dans la dispersion de polymère étant $\geq 5$ à $\leq 90$ % en poids.

**6.** Formulation selon l'une quelconque des revendications 1 à 5, l'agent tackifiant étant choisi dans le groupe constitué par les résines naturelles, les résines d'hydrocarbure, les polyacrylates et des mélanges correspondants.

**7.** Formulation selon l'une quelconque des revendications 1 à 6 comprenant

i) 50 à 95 % en poids de la dispersion de polymère,
ii) 5 à 50 % en poids d'au moins un agent tackifiant,
iii) 0 à 3 % en poids d'au moins un tensioactif, et
iv) 0 à 10 % en poids d'un additif,

le total des composés de i) à iv) étant égal à 100 %.

**8.** Formulation selon l'une quelconque des revendications 1 à 7, comprenant

i) 15 à 90 % en poids de la dispersion de polymère,
ii) 5 à 50 % en poids d'au moins un agent tackifiant,
iii) 0 à 3 % en poids d'au moins un tensioactif, et
iv) 0 à 10 % en poids d'au moins un additif,
v) 5 à 80 % en poids d'au moins une dispersion de polymère supplémentaire v), qui est différente de la dispersion aqueuse de polymère i),

le total des composés de i) à v) étant égal à 100 %.

**9.** Formulation selon l'une quelconque des revendications 1 à 8, la dispersion de polymère v) comprenant a1) au moins un homopolymère ou copolymère P1 contenant sous forme de motifs polymérisés un monomère choisi dans le groupe constitué par les acrylates de $C_{1-12}$-alkyle, les (méth)acrylates de $C_{1-12}$-alkyle, le styrène, le 1,4-butadiène, l'éthylène, l'acétate de vinyle et des mélanges correspondants.

**10.** Procédé pour la préparation d'une formulation selon l'une quelconque des revendications 1 à 9, comprenant une polymérisation aqueuse en émulsion par radicaux libres de monomères de l'au moins un monomère éthyléniquement insaturé duquel l'au moins un homopolymère ou copolymère P est composé par un procédé d'alimentation de monomères, 0 à 50 % des monomères éthyléniquement insaturés, sur la base de la quantité totale des monomères devant être polymérisés, étant ajouté(s) dans des conditions de polymérisation à 0 à 100 % de l'au moins un composé de saccharide S, sur la base de la quantité totale des monomères devant être polymérisés, et au moins le reste de l'au moins un monomère éthyléniquement insaturé et l'au moins un composé de saccharide S étant ajoutés au cours de la polymérisation.

**11.** Utilisation de la formulation selon l'une quelconque des revendications 1 à 9 en tant qu'adhésif, préférablement en tant qu'adhésif sensible à la pression.

**12.** Utilisation de la formulation selon l'une quelconque des revendications 1 à 9 pour la production de feuilles autoadhésives, de rubans autoadhésifs, d'étiquettes autoadhésives ou d'étiquettes lavables.

**13.** Feuille autoadhésive, ruban autoadhésif, étiquette autoadhésive, ou étiquette lavable comprenant la formulation selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 6558792 B1
- EP 0814140 A2
- EP 0609713 A1
- GB 846365 A
- GB 1121878 A
- US 4508864 A
- US 20020006990 A1
- WO 2013083504 A1
- DE 4003422 A
- US 2013202886 A


### Non-patent literature cited in the description


- **DC BLACKLEY.** *Encyclopedia of Polymer Science and Engineering,* 1987, vol. 8, 659
- *high polymer latexes,* 1966, vol. 1, 35
- **H. WARSON.** The Applications of Synthetic Resin Emulsion. 1972, 246
- **D. DIEDERICH.** *chemicals in our time,* 1990, vol. 24, 135-142
- Emulsion Polymerization. Interscience Publishers, 1965
- **F. HOLSCHER.** dispersions of synthetic high polymers. Springer-Verlag, 1969
- **W. MÄCHTLE.** *Makromolekulare Chemie,* 1984, vol. 185, 1025-1039
- Makromolekulare Stoffe [Macromolecular compounds. **HOUBEN-WEYL.** Methoden der organischen Chemie. Georg Thieme Verlag, 1961, vol. 14/1, 192, , 208
- **T.G. FOX.** According to Fox. *Bull. Am. Phys. Soc.,* 1956, 123
- Ullmann's Encyclopädie der technischen Chemie. Verlag Chemie, 1980, vol. 19, 18
- Ullmann's Encyclopedia of Industrial Chemistry. VCH Weinheim, 1992, vol. A21, 169
- **J. BRANDRUP ; E.H. IMMERGUT.** Polymer Handbook. J. Wiley, 1966
- *Adhesives Age,* July 1987, 19-23
- *Polym. Mater. Sci. Eng.,* 1989, vol. 61, 588-592